# EUROPÄISCHE PATENTSCHRIFT

(11) **EP 3 109 123 B1**
(45) Veröffentlichungstag und Bekanntmachung des Hinweises auf die Patenterteilung: **26.08.2020**
(21) Anmeldenummer: 16175535.0
(22) Anmeldetag: 21.06.2016
(51) Int. Cl.: B61D 17/04, B61D 17/10, B61D 17/12, B61D 17/18, B62D 27/00

(54) **FAHRZEUG MIT SANDWICHARTIGEM PLATTENFÖRMIGEM BAUTEIL**
VEHICLE WITH SANDWICH-TYPE SHEET COMPONENT
VEHICULE COMPRENANT UN COMPOSANT EN FORME DE PLAQUE PRIS EN SANDWICH

(30) Priorität: 23.06.2015 DE 102015211558
(43) Veröffentlichungstag der Anmeldung: 28.12.2016
(73) Patentinhaber: Bombardier Transportation GmbH, 10785 Berlin (DE)
(72) Erfinder: Lange, Ronald, 02625 Bautzen (DE); Pretze, Denni, 02625 Bautzen (DE); Lindner, Jens, 01309 Dresden (DE); Schneider, Sven, 02627 Weißenberg OT Kotitz (DE)
(74) Vertreter: Patentanwälte Bressel und Partner mbB

(56) Entgegenhaltungen:
- EP-A1- 0 864 483
- EP-A1- 2 311 722
- WO-A1-2007/056840
- WO-A1-2009/015228
- DE-B3-102012 213 469
- JP-A- 2008 200 985

## Beschreibung

Die Erfindung betrifft ein Fahrzeug, insbesondere ein Schienenfahrzeug, mit einer Anordnung, die zumindest ein erstes sandwichartiges plattenförmiges Bauteil aufweist, sowie ein Rand-Abschlussprofil und/oder ein Verbindungsprofil aufweist. Die Erfindung betrifft ferner ein Verfahren zur Herstellung eines solchen Fahrzeuges. Das sandwichartige plattenförmige Bauteil hat einen plattenförmigen Kernbereich aus einem Kernmaterial und eine Deckschicht aus einem von dem Kernmaterial verschiedenen Deckschichtmaterial.

Im Fahrzeugbau und speziell im Schienenfahrzeugbau werden plattenförmige sandwichartige Bauteile verwendet, insbesondere als Verkleidung auf der Innenseite von Wagenkästen, als Trennwände, als Verkleidung der Unterseite von abgehängten Decken, als Dachelemente von Wagen und/oder als tragende Fußböden.

Eine Sandwichplatte ist üblicherweise ein mindestens dreischichtiger Verbund aus vergleichsweise höherfestem und/oder höhersteifem Material (zum Beispiel Metalle, faserverstärkte oder unverstärkte Kunststoffe, Sperrhölzer oder ähnliches) in einander gegenüberliegenden äußeren Deckschichten und einem insbesondere leichten (d.h. weniger dichten) und insbesondere schubsteifen Kernmaterial geringerer Festigkeit und Steifigkeit (zum Beispiel Kunststoffschäume, Elastomere, Waben aus verschiedenen Materialien, sehr leichte Holzarten wie Balsa, Pappel oder Kork). Bezüglich der vorliegenden Anmeldung umfasst der Begriff sandwichartiges plattenförmiges Bauteil jedoch auch eine Platte mit einem Kern, der eine Deckschicht an lediglich einer Seite aufweist. Optional kann die Deckschicht aus mehreren einzelnen Schichten aufgebaut sein. Insbesondere Kunststoffschäume, aber auch die anderen Kernmaterialien haben bei Verwendung im Fahrzeug den Vorteil, dass sie Schwingungen, die während der Fahrt des Fahrzeugs permanent angeregt werden, dämpfen und somit zwischen Bauteilen nicht oder nur gedämpft übertragen, die über die Platte miteinander in Kontakt sind. Auch der Materialübergang zwischen der Deckschicht und dem Kern dämpft Schwingungen.

Üblicherweise sind Sandwichplatten so ausgelegt, dass die Deckschichten einen wesentlichen Teil der Kräfte zwischen benachbarten Bauteilen übertragen, während die Kernschicht lediglich die Deckschichten trägt und gegebenenfalls deutlich geringere Kräfte überträgt.

Häufig können plattenförmige Bauteile nicht in der für die jeweilige Anwendung gewünschten Größe und Form in einem Stück hergestellt werden. Es besteht daher ein Bedarf für eine Verbindung von sandwichartigen plattenförmigen Verbundbauteilen. Eine weitere Anforderung stellt der Schutz der Platte an ihrem Außenrand dar. Ohne zusätzlichen Randschutz ist die Kernschicht äußeren Einflüssen wie Kräften und eindringenden Stoffen oder Substanzen ausgesetzt.

Es ist möglich, plattenförmige Bauteile zu verbinden, indem diese in dickere Aufnahmeprofile gesteckt und form- oder stoffschlüssig (z. B. mit Klebstoff oder Klebeharz) mit dem Aufnahmeprofil verbunden werden. Dies führt jedoch im Bereich des Aufnahmeprofils zu einer größeren Dicke als die Plattendicke. Eine weitere Möglichkeit Sandwichplatten zu verbinden besteht darin, das Kernmaterial und die Deckschichten mit Falz oder Überplattung stoffschlüssig miteinander zu verbinden. Weiterhin können diese beiden Verfahren miteinander kombiniert werden. In allen Varianten werden jedoch die Kräfte zwischen den Deckschichten, insbesondere Biegemomente, nicht in der gleichen Größenordnung wie innerhalb der einzelnen Deckschichten übertragen.

Ferner ist eine Verbindung zwischen zwei Sandwichplatten mittels Nut und Feder möglich, indem zur Bildung der Nut das Material über den gesamten Kernbereich zwischen den Deckschichten ausgeräumt wird und eine Feder aus einem massiven höherfesten und höhersteifen Material verwendet wird, wobei eine direkte stoffschlüssige Verbindung zwischen den zwei Deckschichten der zu verbindenden Platten und eine indirekte stoffschlüssige Verbindung über die Feder hergestellt werden. Das Gewicht im Rand- oder Verbindungsbereich ist jedoch deutlich höher als entlang der einzelnen Platten. Der Verbindungsbereich stellt eine Diskontinuität im Plattenverbund dar.

Alternativ können Platten partiell an der Plattenoberfläche, d.h. an der Deckschicht, ausgefräst werden, um Aufnahmeprofile eben zur Oberfläche aufzustecken oder in der Platte zu versenken. Dies führt jedoch bei einer Sandwichplatte zum teilweisen oder vollständigen Verlust der strukturellen Festigkeit und Steifigkeit.

Zusätzlich können Sandwichplatten im Randbereich verstärkt werden und dann ähnlich wie bereits für Plattenverbunde beschrieben mit anderen Bauteilen verbunden werden. Dabei kann die geringere Festigkeit und/oder Steifigkeit der Kernschicht an den Rändern der Sandwichplatte zu benachbarten Bauteilen ausgeglichen werden, indem die Kernschicht im Randbereich der Platte mit einem Material verstärkt wird, das eine höhere Festigkeit und/oder Steifigkeit als das Material der Kernschicht hat. Das Einbringen des Verstärkungsmaterials ist jedoch technologisch aufwendig und erhöht die Gesamtmasse. Dadurch entstehen ebenfalls Diskontinuitäten der Steifigkeit und/oder Festigkeit entlang der Plattenebene, d.h. entlang dem Verlauf der Kernschicht.

Auch zum Zweck des Randschutzes können an den Rändern der Platte Profile aufgesteckt werden, welche außen an den einander gegenüberliegenden Oberflächen mit den Deckschichten der Platte verbunden werden. Dadurch wird die Dicke des Randbereichs vergrößert. Dies wiederum führt zu ästhetischen und funktionalen Nachteilen. Auch entstehen Diskontinuitäten bezüglich der Steifigkeit und/oder Festigkeit.

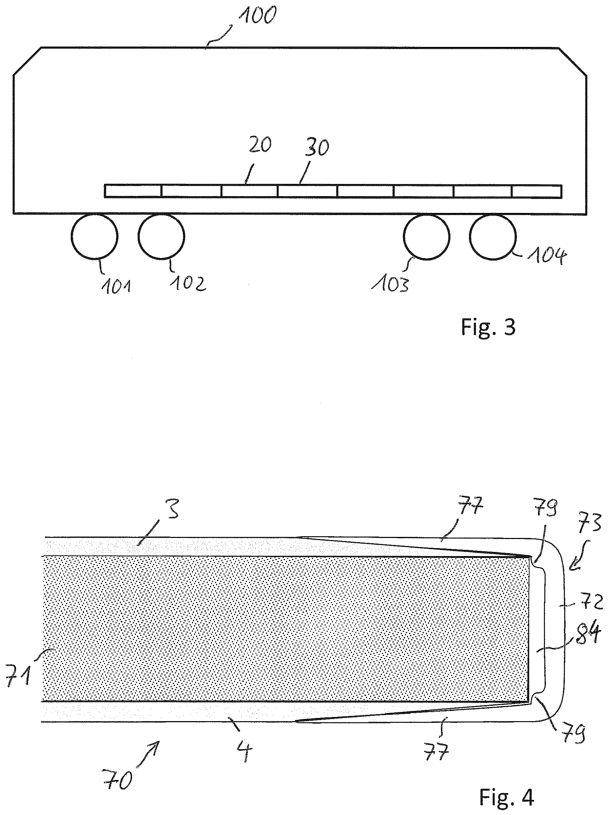

JP 2008 200985 A beschreibt eine sandwichartige Platte mit vorderseitigen und rückseitigen Materialien und geschäumtem Material, das zwischen dem vorderseitigen und dem rückseitigen Material vorgesehen ist. Die sandwichartige Platte ist mit einem Rahmenkörper ausgestattet, der an den peripheren Kanten der Platte vorgesehen ist. Außerdem ist ein Körper aus ausgehärtetem Harz vorgesehen, der in einer Position entsprechend der Innenseite des Rahmenkörpers vorgesehen ist, sodass er die Oberfläche des geschäumten Materials abdeckt. Die Verwendung von sandwichartigen Platten wird auch in Bezug auf Flugzeuge erwähnt. Die in Fig. 4 dargestellte sandwichartige Platte weist einen Rahmenkörper auf, der in Zusammenhang mit einem Spritzgussverfahren zum Herstellen der peripheren Abschnitte der Oberflächenelemente verwendet wird. Der in Fig. 4 dargestellte Harz-Körper ist schadhaft. Die Außenoberflächen der Oberflächenelemente verlaufen jeweils an einem Ende der Platte schräg, unter einem spitzen Winkel zu der Oberflächennormale der Platte und eine Oberfläche des Rahmenkörpers verläuft parallel zu der unter einem spitzen Winkel verlaufenden Oberfläche. Diese schräg verlaufenden Oberflächen des Rahmenkörpers und der Oberflächenelemente verlaufen parallel zueinander und sind in Kontakt miteinander oder nahe beieinander.

WSO 2009/015228 A1 beschreibt ein Verfahren zur Herstellung von End-Effektoren im Zusammenhang mit sandwichartigen Platten, die für verschiedene Anwendungen verwendet werden können, wie z.B. Flugzeuge, Transport und Automobile. Fig. 6 und Fig. 7 der Druckschrift zeigen Querschnitte einer sandwichartigen Platte mit einem daran angebrachten End-Effektor. Am Ende der sandwichartigen Platte ist ein Einsatz aus einem gehärteten Material vorhanden, der gegen den Kern der sandwichartigen Platte gesetzt ist, wobei die Außenhaut auch den Einsatz umgibt. Ein äußeres Verbindungsstück ist komplementär zu dem sich verjüngenden Bereich am Ende des Einsatzes und der Außenhaut geformt und ist mit diesem Endbereich verschraubt.

Aufgabe der vorliegenden Erfindung ist ein Fahrzeug, insbesondere ein Schienenfahrzeug, mit einer Anordnung, die reduzierte Diskontinuitäten von mechanischen Größen wie Dichte, Festigkeit und Steifigkeit am Rand eines sandwichartigen plattenförmigen Bauteils oder an dessen Übergang zu gleichartigen oder andersartigen Bauteilen aufweist. Eine weitere Aufgabe ist es, ein entsprechendes Herstellungsverfahren anzugeben. Ferner soll die Verbindung des Plattenrandes zu einem Rand-Abschlussprofil und/oder zu einem benachbarten Bauteil auf einfache Weise herstellbar sein.

Gemäß einem Grundgedanken der vorliegenden Erfindung wird der Rand eines sandwichartigen plattenförmigen Bauteils mit einem Rand-Abschlussprofil und/oder Verbindungsprofil verbunden. Dieses Profil erstreckt sich in einer Längsrichtung des Randes und weist einen Profilsteg auf, der in der Längsrichtung verläuft. Außerdem erstreckt sich der Profilsteg von einer ersten Seite der Anordnung (die auch eine erste Seite des plattenförmigen Bauteils ist), an der die Deckschicht des plattenförmigen Bauteils angeordnet ist, zu einer zweiten Seite der Anordnung (die auch eine zweite Seite des plattenförmigen Bauteils ist), an der eine der Deckschicht und der ersten Oberfläche gegenüberliegende zweite Oberfläche des plattenförmigen Bauteils liegt. Ein Profilschenkel, der sich ebenfalls in der Längsrichtung des Randes erstreckt und der gegen den Profilsteg abgewinkelt ist, wird durch Schäften mit der Deckschicht des plattenförmigen Bauteils verbunden. Der Profilschenkel bildet dabei vorzugsweise den äußeren, die Außenoberfläche der Verbindung bildenden Teil des Verbindungsbereichs. Gemäß den Patentansprüchen erstreckt sich ein Schlitz von dem Rand des Kernbereichs in das Innere des Kernbereichs des plattenförmigen Bauteils hinein.

Unter dem Schäften wird verstanden, dass die parallel oder annähernd parallel zueinander verlaufenden Grenzflächen (d.h. Oberflächen) der miteinander zu verbindenden Teile (hier des Profilschenkels und der Deckschicht) schräg, d.h. unter einem spitzen Winkel zu einer theoretisch möglichen kleinsten Grenzfläche (entsprechend einer Längsschnittsfläche senkrecht zur Oberfläche des plattenförmigen Bauteils) der miteinander zu verbindenden Teile verlaufen. Im Fall des plattenförmigen Bauteils ist die Richtung der theoretisch möglichen kleinsten Grenzfläche daher die Richtung der Oberflächennormalen des plattenförmigen Bauteils. In dieser Richtung ist die Dicke der Deckschicht und der Platte zu bestimmen.

Allgemeiner formuliert können durch Schäften die Grenzflächen zweier z. B. plattenförmiger Bauteile annähernd gleicher Ausrichtung durch einen im spitzen Winkel zu den Bauteiloberflächen verlaufenden Schnitt und/oder Grenzflächenverlauf so miteinander verbunden werden, dass die durch die Grenzflächen gebildete Schnittstellenfläche am Übergang der Bauteile wesentlich großflächiger ist, als es eine Längsschnittsfläche der Bauteile in einer Längsschnittsebene senkrecht zur Bauteiloberfläche wäre.

Insbesondere können der Profilschenkel und der Verbindungsbereich der Deckschicht in einem Längssschnitt die gleiche dreieckige Form haben. Der Profilschenkel wird derart von außen dem Verbindungsbereich der Deckschicht überlagert, dass die beiden Dreiecke sich zu einem Rechteck ergänzen, d.h. der Verbindungsbereich hat insbesondere eine konstante Dicke. Während ausgehend von der Deckschicht in Richtung Profilsteg die Dicke des Materials der Deckschicht kontinuierlich in dem Verbindungsgereich abnimmt, nimmt die Dicke des Profilschenkels kontinuierlich bis zum Ende des Verbindungsbereichs am oder in der Nähe des Profilsteges zu.

Durch das Schäften (d.h. durch das Verbinden schräg verlaufender Grenzflächen) wird die Größe der parallel zueinander verlaufenden Grenzflächen sowohl des Profilschenkels als auch der Deckschicht vergrößert. Im Übergangsbereich zwischen der Deckschicht und dem Profilschenkel findet daher in Fortsetzung des Verlaufs der Deckschicht Richtung Plattenrand ein kontinuierlicher Übergang der mechanischen Eigenschaften von Deckschicht zu Profilschenkel statt. Bereits aus diesem Grund ist die Diskontinuität der mechanischen Eigenschaften im Übergangsbereich gering. Vorzugsweise wird ferner das Material des Profilschenkels und insbesondere des gesamten Profils so auf die Eigenschaften des Materials der Deckschicht abgestimmt, dass die Unterschiede der mechanischen Eigenschaften gering sind. Z.B. kann bei einer Deckschicht aus Metall das Profil ebenfalls aus Metall gefertigt sein, vorzugsweise aus derselben Art von Metall. Aber auch bei Deckschichten aus anderen Materialien, wie z.B. Kunstsoffen oder faserverstärkten Kunststoffen, lässt sich das Profil aus einem Material herstellen, das bei gleicher Dicke oder im Bereich der größten Dicke des Profilschenkels jedenfalls keine geringere Festigkeit und/oder Steifigkeit hat als die Deckschicht.

Insbesondere besteht das Randabschlussprofil oder Verbindungsprofil maßgeblich aus einem Profilsteg, welcher am Rand bzw. der Randfläche des plattenförmigen Bauteiles verläuft und mindestens einen in Richtung und Fläche der Plattenoberseite ausgerichtetem Profilschenkel aufweist. Dieser ist gemäß einem Grundgedanken der vorliegenden Erfindung durch eine Schäftung mit der Oberfläche verbunden.

Des Weiteren kann die Verbindung durch Schäften an zumindest einer Seite des plattenförmigen Bauteils ausgeführt werden, ohne die Deckschicht anzuschrägen. Vielmehr können die an den gegenüberliegenden Seiten des plattenförmigen Bauteils liegenden Profilschenkel des Rand-Abschlussprofils oder Verbindungsprofils die Deckschicht(en) des plattenförmigen Bauteils zusammendrücken, sodass sich die Deckschicht(en) an die Form der Grenzfläche des Profilschenkels anpasst. Dies kann durch eine Aussparung im Kernmaterial (z. B. durch einen Einschnitt oder Einfräsen) entlang des Randes des plattenförmigen Bauteils erleichtert werden.

Der bereits verwendete Begriff der Grenzfläche bedeutet nicht zwangsläufig, dass das Material des Profilschenkels unmittelbar in Kontakt mit dem Material der Deckschicht ist. Vielmehr können die Deckschicht und der Profilschenkel z.B. miteinander verklebt oder anderweitig stoffschlüssig miteinander verbunden sein. In diesem Fall wird es bevorzugt, dass die Verbindung vollflächig über die Grenzflächen realisiert ist, d.h. sich keine Hohlräume zwischen den einander gegenüberstehenden und parallel zueinander verlaufenden Grenzflächen der Deckschicht und des Profilschenkels verbleiben. Vielmehr sind die Grenzflächen vollflächig über eine durchgehende Klebstoffschicht oder ein anorganisches stoffschlüssig verbindendes Material miteinander verbunden.

Allgemeiner formuliert können die Deckschicht und der Profilschenkel insbesondere stoffschlüssig (insbesondere durch Kleben mit Klebstoff, z.B. Klebeharz, oder durch Schweißen), formschlüssig und/oder kraftschlüssig (insbesondere durch Klemmen) miteinander verbunden werden. Eine Klemm-Verbindung, bei der die Grenzfläche des Profilschenkels an die Grenzfläche der Deckschicht angepresst wird, ist insbesondere dadurch möglich, dass auch an der gegenüberliegenden Seite der Platte ein insbesondere symmetrisch zu dem ersten Profilschenkel ausgebildeter zweiter Profilschenkel vorhanden ist. Der erste und der zweite Profilschenkel können einen geringfügig kleineren Abstand zueinander haben als die Dicke des Randbereichs der Platte, bevor der Randbereich zwischen die Profilschenkel eingebracht und dadurch eingeklemmt wird. Durch das Einbringen des Endbereichs vergrößert sich der Abstand der Profilschenkel zueinander und entsteht die Klemmwirkung.

Die Länge des Verbindungsbereichs, in dem der Profilschenkel mit der Deckschicht verbunden ist (diese Länge ist im Querschnitt entlang der Richtung zu bestimmen, in der die Deckschicht entlang ihrer Außenoberfläche in Richtung Plattenrand verläuft) beträgt vorzugsweise mindestens das 10-fache der Deckschichtdicke, besonders bevorzugt mindestens das 20-fache, z.B. mindestens das 30-fache der Deckschichtdicke. Sie kann jedoch auch kleiner als das 10-fache der Deckschichtdicke sein. Sie kann z.B. höchstens das 50-fache der Deckschichtdicke betragen.

Ebenfalls bevorzugt wird, dass dem ersten Profilschenkel wie bereits erwähnt ein zweiter Profilschenkel an der gegenüberliegenden Seite der Platte gegenüberliegt und der Randbereich des Kerns der Platte zwischen dem ersten und dem zweiten Profilschenkel aufgenommen ist. Der zweite Profilschenkel ist nicht notwendig symmetrisch zu dem ersten Profilschenkel. Im Querschnitt betrachtet kann er z. B. eine andere Länge und/oder Dicke haben. Ein Profil mit einander gegenüberstehenden Profilschenkeln kann in einer ersten Ausführungsform ein Rand-Abschlussprofil sein. In diesem Fall sind in einem Querschnitt der Anordnung betrachtet lediglich ein erster Profilschenkel auf der ersten Seite der Anordnung und ein zweiter Profilschenkel auf der gegenüberliegenden, zweiten Seite der Anordnung vorhanden.

In anderen Ausgestaltungen weist das Profil jedoch zumindest einen weiteren Profilschenkel auf und vorzugsweise zumindest ein weiteres Paar von einander gegenüberstehenden Profilschenkeln, zwischen denen ein Randbereich eines weiteren sandwichartigen plattenförmigen Bauteils aufgenommen ist oder werden kann. Während das Rand-Abschlussprofil im Querschnitt als C-förmig bezeichnet werden kann, können die genannten weiteren Ausgestaltungen des Profils im Querschnitt z.B. als H-förmig (zum Verbinden von Platten zu einem durchgehenden Plattenverbund) oder z.B. als sternförmig oder T-förmig (zur Herstellung eines Plattenverbundes mit abgewinkelt zueinander verlaufenden Plattenebenen) bezeichnet werden. Auf Ausführungsbeispiele wird noch anhand der Figuren eingegangen.

Optional kann zumindest ein zusätzliches Element (zum Beispiel ein Funktionselement wie Lichtleiste, Designelement o.ä. sowie Befestigungsprofil wie C-Schiene, Klemmleiste o.ä.) an dem Profil angeformt sein/werden.

Vorzugsweise ist der Profilschenkel des Profils bezüglich seiner Steifigkeit und/oder Festigkeit der Deckschicht der Platte angepasst, d.h. aus einem Material mit vergleichbaren Materialeigenschaft(en) vorgefertigt. Der Vergleich bezieht sich auf die Deckschicht am Beginn des Verbindungsbereichs, wo sie innerhalb des Verbindungsbereichs ihre größte Dicke hat, und auf den Profilschenkel am Ende des Verbindungsbereichs, wo der Profilschenkel innerhalb des Verbindungsbereichs seine größte Dicke aufweist und dann in den Profilsteg übergeht. Insbesondere beträgt die Festigkeit und/oder Steifigkeit des Profilschenkels mindestens die Hälfte der Festigkeit und/oder Steifigkeit der Deckschicht. Bevorzugt ist die Festigkeit und/oder Steifigkeit des Profilschenkels mindestens genauso groß wie die Festigkeit und/oder Steifigkeit der Deckschicht.

Die erfindungsgemäße Verbindung des Profils mit der Platte hat insbesondere die folgenden Vorteile: Insbesondere als Verbindungsprofil zwischen zwei plattenförmigen Bauteilen werden mechanische Schwachstellen und Diskontinuitäten der mechanischen Eigenschaften am Übergang der Platten verringert oder vermieden. Es lässt sich ferner ein durchgehender Plattenverbund ohne vorspringenden Verbindungsbereich herstellen, da aufgrund der parallel zueinander und schräg verlaufenden Grenzflächen der Deckschicht und des Profilschenkels weder ein Einlassen von Verbindungsmitteln in den Kern der Platte noch ein über die Ebene der Oberfläche der Platte hinausragendes Verbindungsbauteil erforderlich sind. Jedenfalls ohne wesentlichen oder gar keinen Überstand über die Ebene der Plattenoberfläche kann auch ein Randabschluss mittels eines erfindungsgemäßen Rand-Abschlussprofils hergestellt werden. So kann der Plattenrand vor unzulässig großen angreifenden Kräften oder anderen Einflüssen geschützt werden. Außerdem schützt das Rand-Abschlussprofil oder Verbindungsprofil den jeweiligen Rand des plattenförmigen Bauteils vor äußeren Einflüssen, insbesondere wenn der Randbereich zwischen einem ersten Profilschenkel auf der ersten Seite der Platte und einem zweiten Profilschenkel auf der zweiten, gegenüberliegenden Seite der Platte aufgenommen ist.

Insbesondere kann die Verbindung zwischen dem Profilschenkel und der Deckschicht auf einfache Weise und dauerhaft zuverlässig stoffschlüssig hergestellt werden. Neben Kleben ist insbesondere bei geeigneten Metallpaaren, aber auch bei geeigneten Kunststoffmaterialpaaren, ein Verschweißen oder Verlöten der Deckschicht mit dem Profilschenkel möglich.

Zur Herstellung der Verbindung werden der Profilschenkel und der Randbereich der Platte z. B. aufeinander zu bewegt, bis die endgültige Verbindungsposition erreicht ist. In der Praxis kann hierzu entweder das Profil oder die Platte bewegt werden, oder es können beide bewegt werden. Im Fall der stoffschlüssigen Verbindung wird diese je nach Art der stoffschlüssigen Verbindung vor oder während der Relativbewegung vorbereitet (z.B. durch Aufbringen von Klebstoff auf die Grenzflächen von Deckschicht und/oder Profilschenkel) und/oder nach dem Abschluss der Relativbewegung wird die entsprechende Maßnahme ergriffen (z.B. Erwärmen, um den Klebstoff zu aktivieren oder das Lot in den Hohlraum zwischen den einander gegenüberliegenden parallelen Grenzflächen von Deckschicht und Profilschenkel einzubringen).

Vorzugsweise ist das Profil (z. B. am Übergang von Profilschenkel zu Profilsteg) mit einem Anschlag versehen, an der Rand der Sandwichplatte (und insbesondere der Kern) formschlüssig anschlägt bzw. angeschlagen wird. Insbesondere kann der Anschlag lediglich am Übergang von Profilschenkel zu Profilsteg ausgebildet sein, d.h. der Kern endet in seinem zentralen Bereich in einem Abstand zu dem Profilsteg. Es entsteht ein Freiraum, welcher z. B. überschüssigen Klebstoff, überschüssiges Klebeharz oder anorganische stoffschlüssig verbindende Materialien wie Lot aufnehmen kann.

Das Profil kann als Strangpressprofil oder Pulltrusionsprofil ausgeführt sein, um eine kontinuierliche Fertigung mit gleichbleibendem Querschnitt zu ermöglichen. Andere Fertigungsverfahren sind möglich.

Insbesondere können die Oberflächen von plattenförmigen Bauteile, die über das Verbindungsprofil miteinander verbunden sind, in den Randbereichen der Bauteile gemeinsam mit der Außenoberfläche des Verbindungsprofils eine durchgehende ebene Oberfläche bilden, wobei optional kleine Fugen am Übergang der Verbindungsprofiloberfläche zu den Oberflächen der plattenförmigen Bauteile vorhanden sein können.

Es wird ein Fahrzeug, insbesondere Schienenfahrzeug, nach Anspruch 1 beansprucht.

Ferner wird ein Verfahren zum Herstellen eines Fahrzeuges nach Anspruch 9 vorgeschlagen.

Ausgestaltungen des Herstellungsverfahrens ergeben sich aus der Beschreibung von Ausgestaltungen der Anordnung bzw. des Fahrzeuges.

Wie bereits erwähnt müssen beim Schäften nicht an beiden miteinander zu verbindenden Bauteilen vor dem Herstellen der Verbindung schräg verlaufende Grenzflächen hergestellt werden. Vielmehr kann ein im Vergleich zur Deckschicht formstabileres Material des ersten Profilschenkels während der Herstellung der Verbindung die Grenzfläche der Deckschicht aufgrund des nachgiebigeren Materials der Deckschicht und/oder des Kerns an seine Grenzflächenausrichtung anpassen.

Insbesondere kann die Anordnung das Verbindungsprofil, ein erstes und ein zweites sandwichartiges plattenförmiges Bauteil aufweisen, die zu einem gemeinsamen plattenförmigen Verbundbauteil verbunden sind, wobei
- das zweite sandwichartige plattenförmige Bauteil einen plattenförmigen Kernbereich aus einem Kernmaterial und eine Deckschicht aus einem von dem Kernmaterial verschiedenen Deckschichtmaterial aufweist,
- der Profilsteg des Verbindungsprofils in einem Zwischenraum zwischen sich einander gegenüberliegend erstreckenden Rändern des ersten und des zweiten plattenförmigen Bauteils in einer Längsrichtung der Ränder verläuft und der Profilsteg sich von einer ersten Seite der Anordnung, an der die Deckschichten der sandwichartigen plattenförmigen Bauteile angeordnet sind und an der die erste Oberfläche des ersten plattenförmigen Bauteils und eine erste Oberfläche des zweiten plattenförmigen Bauteils liegen, zu einer zweiten Seite der Anordnung erstreckt, an der den Deckschichten und den ersten Oberflächen gegenüberliegende zweite Oberflächen des ersten und des zweiten plattenförmigen Bauteils liegen,
- das Verbindungsprofil zwei erste Profilschenkel aufweist, die sich an der ersten Seite der Anordnung ausgehend von dem Profilsteg in einander entgegengesetzte Richtungen erstrecken und die in der Längsrichtung der Ränder verlaufen,
- einer der ersten Profilschenkel ganz oder teilweise in einer Aussparung des zweiten plattenförmigen Bauteils aufgenommen ist,
- die Aussparung des zweiten plattenförmigen Bauteils ganz oder teilweise von einer Aussparung der Deckschicht des zweiten plattenförmigen Bauteils gebildet ist,
- der in der Aussparung des zweiten plattenförmigen Bauteils aufgenommene erste Profilschenkel durch Schäften mit der Deckschicht des zweiten plattenförmigen Bauteils verbunden ist, d.h. parallel zueinander verlaufende Grenzflächen des ersten Profilschenkels und der Deckschicht des zweiten plattenförmigen Bauteils verlaufen schräg, unter einem spitzen Winkel zu einer Oberflächennormale des zweiten plattenförmigen Bauteils und sind miteinander verbunden.

Vorzugsweise weist das Verbindungsprofil des plattenförmigen Verbundes zwei zweite Profilschenkel auf, die sich an der zweiten Seite der Anordnung ausgehend von dem Profilsteg in einander entgegengesetzte Richtungen erstrecken und die in der Längsrichtung der Ränder verlaufen, so dass Randbereiche des ersten und des zweiten plattenförmigen Bauteils, die die sich einander gegenüberliegend erstreckenden Ränder des ersten und des zweiten plattenförmigen Bauteils bilden, zwischen jeweils einem der ersten Profilschenkel und jeweils einem der zweiten Profilschenkel aufgenommen sind.

Aber auch ein Rand-Abschlussprofil oder ein Verbindungsprofil zu einem Verbund von zueinander abgewinkelten Platten kann zwei einander gegenüberliegende Profilschenkel (oder mehrere Paare von solchen Profilschenkeln) aufweisen, zwischen denen der Randbereich des Plattenkerns aufgenommen ist. In all diesen Fällen ist es bevorzugt, dass beide Profilschenkel jeweils durch Schäften mit einer der gegenüberliegenden Deckschichten der Platte verbunden sind. Dadurch entsteht eine Verbindung zu dem Profil, die besonders geringe Diskontinuitäten aufweist.

Im Fall eines durchgehenden Plattenverbundes ist eine Ausgestaltung möglich bei der die erste Oberfläche des ersten plattenförmigen Bauteils, eine Verbindungsprofiloberfläche des Verbindungsprofils an der ersten Seite und die erste Oberfläche des zweiten plattenförmigen Bauteils in einer gemeinsamen Ebene liegen, die den Zwischenraum zwischen den sich einander gegenüberliegend erstreckenden Rändern überbrückt.

Zur Bildung eines abgewinkelten Plattenverbundes kann die Anordnung das Verbindungsprofil, ein erstes sandwichartiges plattenförmiges Bauteil und ein zweites sandwichartiges plattenförmiges Bauteil aufweisen, die zu einem gemeinsamen Verbundbauteil verbunden sind, wobei
- das zweite sandwichartige plattenförmige Bauteil einen plattenförmigen Kernbereich aus einem Kernmaterial und eine Deckschicht aus einem von dem Kernmaterial verschiedenen Deckschichtmaterial aufweist,
- der Profilsteg ein erster Profilsteg ist, der an dem Rand des ersten plattenförmigen Bauteils in der Längsrichtung des Randes verläuft, und das Verbindungsprofil einen zweiten Profilsteg aufweist, der an einem Rand des zweiten plattenförmigen Bauteils in der Längsrichtung des Randes verläuft und der sich von einer ersten Seite des zweiten sandwichartigen plattenförmigen Bauteils, an der die Deckschicht eine erste Oberfläche des zweiten plattenförmigen Bauteils bildet, zu einer zweiten Seite des zweiten sandwichartigen plattenförmigen Bauteils erstreckt, an der eine der Deckschicht und der ersten Oberfläche gegenüberliegende zweite Oberfläche des zweiten plattenförmigen Bauteils liegt,
- der erste Profilsteg und der zweite Profilsteg abgewinkelt zueinander angeordnet sind und die Längsrichtungen der Ränder des ersten plattenförmigen Bauteils und des zweiten plattenförmigen Bauteils parallel zueinander verlaufen,
- das Verbindungsprofil zwei erste Profilschenkel aufweist, von denen jeweils einer an der ersten Seite des ersten oder zweiten plattenförmigen Bauteils in der Längsrichtung des Randes verläuft, wobei die zwei ersten Profilschenkel in zueinander abgewinkelte Richtungen verlaufen,
- einer der ersten Profilschenkel ganz oder teilweise in einer Aussparung des zweiten plattenförmigen Bauteils aufgenommen ist,
- die Aussparung des zweiten plattenförmigen Bauteils ganz oder teilweise von einer Aussparung der Deckschicht des zweiten plattenförmigen Bauteils gebildet ist,
- der in der Aussparung des zweiten plattenförmigen Bauteils aufgenommene erste Profilschenkel durch Schäften mit der Deckschicht des zweiten plattenförmigen Bauteils verbunden ist, d.h. parallel zueinander verlaufende Grenzflächen des ersten Profilschenkels und der Deckschicht des zweiten plattenförmigen Bauteils verlaufen schräg, unter einem spitzen Winkel zu einer Oberflächennormale des zweiten plattenförmigen Bauteils und sind miteinander verbunden.

Wie oben erwähnt kann ein Anschlag vorhanden sein. Insbesondere schlägt ein Anschlag des Rand-Abschlussprofils und/oder des Verbindungsprofils in einem Übergangsbereich zwischen dem Profilsteg und dem in die Aussparung aufgenommenen Profilschenkel an dem Rand des sandwichartigen plattenförmigen Bauteils an.

Vorzugsweise, auch im Fall des Anschlages, ist zwischen dem Profilsteg und einem Rand des Kernbereichs des sandwichartigen plattenförmigen Bauteils ein Hohlraum vorhanden, der z. B. einen Klebstoffüberschuss oder ein anderes stoffschlüssig verbindendes Material aufnehmen kann oder aufnimmt Der überschüssige Klebstoff kann z. B. aus dem Verbindungsbereich von Deckschicht und Profilschenkel in den Hohlraum ausweichen.

Gegenstand der Erfindung ist auch ein Fahrzeug (z.B. ein Schienenfahrzeug) in dem die Anordnung mit zumindest einem plattenförmigen sandwichartigen Bauteil und mit dem Verbindungsprofil oder Rand-Abschlussprofil als Verkleidung auf der Innenseite des Fahrzeug-Wagenkastens, als Trennwand, als Verkleidung der Unterseite einer abgehängten Decke, als Dachelement und/oder als tragender Teil eines Fußbodens vorhanden ist.

Im Folgenden werden Ausführungsbeispiele der Erfindung unter Bezugnahme auf die beiliegende Zeichnung beschrieben. Es zeigen schematisch:
- Fig. 1: einen Querschnitt durch eine Anordnung mit einem Verbindungsprofil und zwei über das Verbindungsprofil miteinander verbundenen sandwichartigen plattenförmigen Bauteilen, die nicht Teil der Erfindung ist,
- Fig. 2: einen Querschnitt durch eine derartige Anordnung, wobei jedoch das Verbindungsprofil entgegen den beigefügten Ansprüchen nicht durch Schäften mit den plattenförmigen Bauteilen verbunden ist,
- Fig. 3: in vereinfachter schematischer Darstellung ein Schienenfahrzeug, in dem ein Verbund von Platten einen Fußboden bildet,
- Fig. 4: einen Querschnitt durch eine Anordnung mit einem sandwichartigen plattenförmigen Bauteil, dessen Rand mit einem Rand-Abschlussprofil verbunden ist, die nicht Teil der Erfindung ist,
- Fig. 5: einen Querschnitt durch eine Anordnung mit einem sandwichartigen plattenförmigen Bauteil, dessen Rand über ein Verbindungsprofil mit dem Rand eines weiteren sandwichartigen plattenförmigen Bauteils verbunden ist, wobei die Profilschenkel an den gegenüberliegenden Seiten der Anordnung durch Schäften mit den Deckschichten der Bauteile verbunden sind, die nicht Teil der Erfindung ist,
- Fig. 6: schematisch eine Draufsicht auf die Anordnungen nach Fig. 1 oder 5, wobei verdeckte Linien, die die Ränder des Profilstegs und der Hohlräume darstellen gestrichelt dargestellt sind,
- Fig. 7: eine Querschnittsdarstellung zweier sandwichartiger plattenförmiger Bauteile und eines Verbindungsprofils vor der Verbindung zu einem durchgehenden Plattenverbund,
- Fig. 8: den durchgehenden Plattenverbund entsprechen der Anordnung nach Fig. 7,
- Fig. 9: eine Querschnittsdarstellung eines T-förmigen Plattenverbundes dreier sandwichartiger plattenförmiger Bauteile, die über ein einziges T-förmiges Verbindungsprofil miteinander verbunden sind,
- Fig. 10: eine Querschnittsdarstellung zweier sandwichartiger plattenförmiger Bauteile und eines winkelförmigen Verbindungsprofils, die zu einem abgewinkelten durchgehenden Plattenverbund verbunden sind,
- Fig. 11: eine erfindungsgemäße Querschnittsdarstellung eines Rand-Abschlussprofils und eines Randabschnitts eines sandwichartigen plattenförmigen Bauteils, wobei jedoch im Unterschied zu den Teilen, die zu der Anordnung in Fig. 4 verbunden sind, die randseitigen Oberflächen der Deckschichten geneigt gegen die Oberfläche des Bauteils verlaufen aber nicht die Grenzflächen für die Verbindung mit dem Rand-Abschlussprofil bilden, und
- Fig. 12: eine erfindungsgemäße Querschnittsdarstellung einer Anordnung, in der das Rand-Abschlussprofil und der Abschnitt des sandwichartigen plattenförmigen Bauteils aus Fig. 11 miteinander durch Schäften verbunden sind.

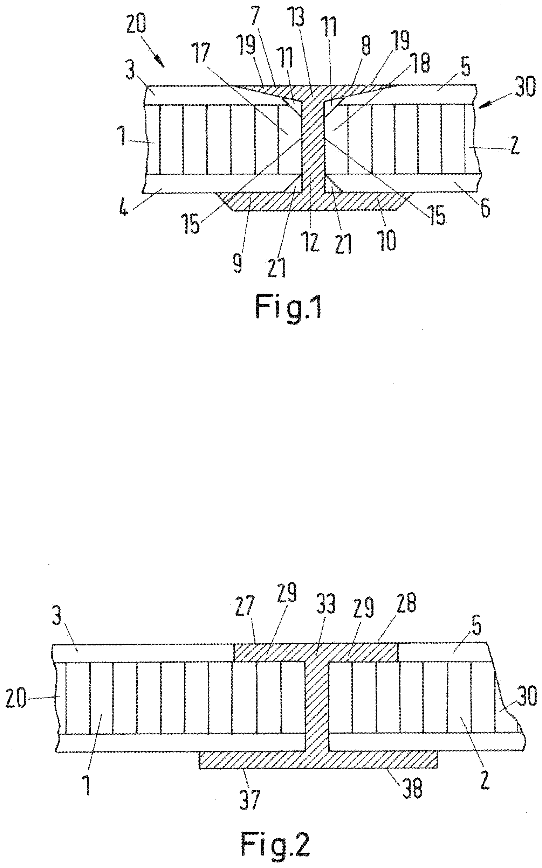

Fig. 1 zeigt eine Querschnittsansicht eines Übergangsbereich zwischen zwei nebeneinander angeordneten plattenförmigen Bauteilen 20, 30, deren Randbereiche 17, 18 über ein Verbindungsprofil 13 miteinander verbunden sind. Zur Herstellung der Verbindung können die plattenförmigen Bauteile 20, 30 in der Darstellung von rechts bzw. von links in C-profilförmige Aufnahmen gesteckt werden, die von dem Verbindungsprofil 13 gebildet sind.

In dem dargestellten Ausführungsbeispiel weisen die plattenförmigen Bauteile an einander gegenüberliegenden Seiten (oben und unten in der Figur) Deckschichten 3, 4, 5, 6 mit einer dazwischenliegenden Kernschicht 1, 2 auf. Die Verbindung zwischen Kern- und Deckschichten 3, 4, 5, 6 ist in dem Ausführungsbeispiel stoffschlüssig. Die Art der Verbindung ist davon abhängig, welche Materialien für die Deck- und Kernschicht verwendet werden. Es kann sich z. B. um eine Klebstoffverbindung oder Schweißverbindung handeln. Alternativ kann es sich bei zumindest einem der Bauteile um ein monolithisches plattenförmiges Bauteil handeln, bei dem das Material im Kernbereich auch die Oberflächen bildet.

Lediglich an einer Seite der Anordnung in Fig. 1 weisen die Deckschichten im Übergangsbereich Aussparungen 19 auf, in die erste Profilschenkel 7, 8 des Verbindungsprofils 13 eingelassen sind. An dieser Seite sind die Profilschenkel 7, 8 durch Schäften mit den Deckschichten 3, 5 verbunden. Der schräge Verlauf der innenseitigen Oberfläche der zwei ersten Profilschenkel 7, 8 setzt sich bis zu einem Profilsteg 12 des Verbindungsprofils 13 fort. Die Grenzflächen der Deckschichten 3, 5 und der Profilstege 7, 8 enden jedoch in dem Ausführungsbeispiel der Fig. 1 an Hohlräumen 11. Dort nehmen die Oberflächen der Bauteile 20, 30 einen anderen Verlauf als die innenseitigen Oberflächen der Profilschenkel 7, 8 und weisen in ihrem weiteren Verlauf einen zunehmenden Abstand zu der ebenen Außenoberfläche der Anordnung auf. Zum Beispiel ist dieser Verlauf im Querschnitt gekrümmt oder (wie dargestellt) ebenfalls schräg, jedoch mit größerer Neigung. Die Grenzfläche (Oberfläche) am Grund der Aussparung 19 liegt in ihrem Verlauf von der Außenoberfläche der Anordnung zu dem Hohlraum 11 vollflächig (optional verbunden über eine Klebstoffschicht) an der Grenzfläche (Oberfläche) des Profilschenkels 7, 8 an.

Die zweiten Profilschenkel 9, 10 an der gegenüberliegenden Seite der Anordnung (unten in Fig. 1) sind nicht in Aussparungen der plattenförmigen Bauteile 20, 30 eingelassen, sondern liegen an den Außenoberflächen der Bauteile 20, 30 und daher im Ausführungsbeispiel an nicht ausgesparten Deckschichten 4, 6 an, wobei zwischen dem Rand des plattenförmigen Bauteils 20, 30, dem Profilsteg 12 und den zweiten Profilschenkeln 9, 10 jeweils ein Hohlraum 21 vorhanden ist, in dem wie auch in den Hohlräumen 11 überschüssiger Klebstoff für die Klebstoffverbindung des Bauteils 20, 30 mit dem Verbindungsprofil 13 aufgenommen werden kann.

Der Profilsteg 12 des Verbindungsprofils 13 verläuft in einem Zwischenraum zwischen sich einander gegenüberliegend erstreckenden Rändern 15 des ersten und des zweiten plattenförmigen Bauteils 20, 30 in einer Längsrichtung (senkrecht zur Figurenebene) der Ränder 15. Er erstreckt sich von der ersten Seite der Anordnung (oben in der Figur) zu der zweiten Seite der Anordnung (unten in der Figur). Der Profilsteg 12 schlägt an zumindest einem der einander gegenüberliegenden Ränder 15 an, optional verbunden über eine Klebstoffschicht.

Beispielsweise können die Aussparungen 19 und die Hohlräume 11, 21 hergestellt werden, indem Material insbesondere der Deckschichten 3, 5 entfernt wird, zum Beispiel durch Schneiden, Fräsen und/oder Schleifen. Alternativ oder zusätzlich können die Aussparungen 19 und/oder die Hohlräume 11, 21 zumindest teilweise bereits während der Herstellung der plattenförmigen Bauteile 20, 30 freigehalten werden. Dadurch kann das spätere Entfernen von Material reduziert oder vermieden werden.

Zur Herstellung der Verbindung der beiden plattenförmigen Bauteile 20, 30 werden die Randbereiche 17, 18 in die C- förmigen Aufnahmen des Verbindungsprofils 13 gesteckt, optional nachdem auf die Oberflächen der Bauteile und/oder des Verbindungsprofils 13 Klebstoff aufgetragen wurde. Auf diese Weise kann eine formschlüssige und/oder kraftschlüssige Verbindung erzielt werden.

Wenn auch nicht bevorzugt, könnte die Oberfläche des Verbindungsprofils alternativ über das Niveau der oberen Oberflächen der plattenförmigen Bauteile hinausragen oder die Profilschenkel könnten so tief in die Aussparungen der Deckschichten eingelassen sein oder weniger dick als Deckschichten sein, dass die Oberfläche des Verbindungsprofils im Vergleich zu den oberen Oberflächen der Bauteile zurückspringt. Alternativ oder zusätzlich kann zumindest eine der Deckschichten aus einem Verbund von zwei oder mehr als zwei einzelnen Deckschichten, insbesondere aus unterschiedlichen Materialien, bestehen, sodass die Deckschicht jeweils zumindest aus einer äußeren Teilschicht und einer mit dieser (insbesondere stoffschlüssig) verbundenen inneren Teilschicht zusammengesetzt ist.

Im Folgenden werden weitere Verbindungen zumindest eines plattenförmigen Bauteils mit einem Profil beschrieben. Dabei werden teilweise dieselben Bezugszeichen für funktionsgleiche oder gleiche Merkmale wie in Fig. 1 verwendet.

Fig. 2 zeigt eine Verbindung mit einem im Querschnitt H-förmigen Verbindungsprofil 33, d.h. einem Doppel-T-Profil. Keiner der Profilschenkel ist jedoch durch Schäften mit einer Deckschicht verbunden, sondern weist die kleinstmögliche Grenzfläche zu der jeweiligen Deckschicht auf. Dadurch entstehen Diskontinuitäten am Übergang. Zwar sind die Deckschichten 3, 5 an der ersten Seite (oben) der Anordnung ebenfalls ausgespart. Jedoch verlaufen die Oberflächen am Grund der Aussparungen 29 in den plattenförmigen Bauteilen 20, 30 nicht schräg, sondern parallel zu der ebenen Außenoberfläche. Die Oberflächen am Grund der Aussparungen 29 erstrecken sich in Fortsetzung der Grenzfläche zwischen der Deckschicht 3, 5 und der Kernschicht 1, 2. Dementsprechend sind die in die Aussparungen 29 eingelassenen ersten Profilschenkel 27, 28 im Querschnitt rechteckförmig. Eine solche rechteckige Querschnittsform, jedoch bei größeren Schenkellängen, weisen auch die zweiten Profilschenkel 37, 38 an der gegenüberliegenden, unten in der Figur dargestellten Seite der Anordnung auf. Sie sind jedoch nicht in Aussparungen eingelassen und liegen an den Außenoberflächen der unteren Deckschichten an.

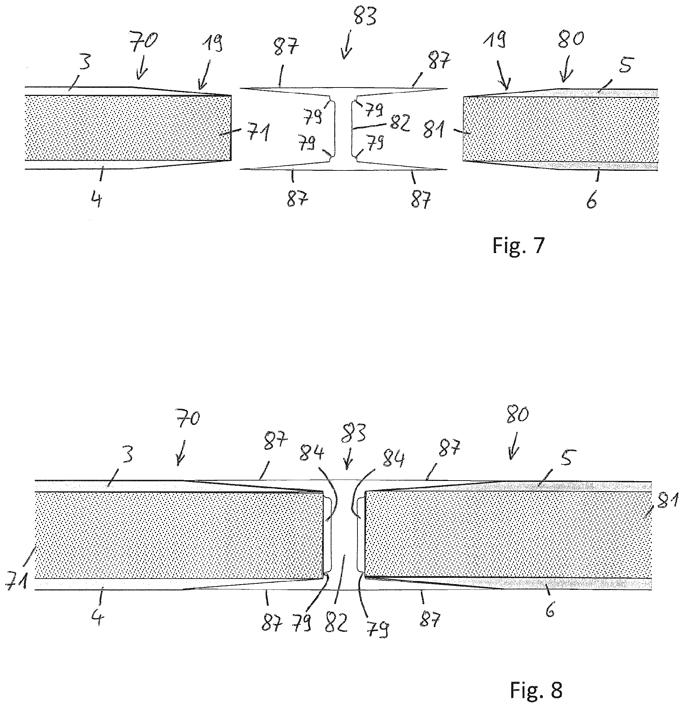

Das schematisch in einem Längsschnitt in Fig. 3 dargestellte Schienenfahrzeug weist Räder 101, 102, 103, 104 auf, mit denen das Fahrzeug 100 auf nicht dargestellten Schienen rollt. Im Inneren des Fahrzeugs 100 befindet sich ein Fußboden aus sandwichartigen plattenförmigen Bauteilen. Zwei dieser Bauteile sind z.B. entsprechend der Ausführungsform aus Fig. 1 mit den Bezugszeichen 20, 30 bezeichnet. Die Verbindung der einzelnen plattenförmigen Bauteile zu einem Plattenverbund kann jedoch auf andere Weise, z.B. wie in Fig. 8 dargestellt, ausgeführt sein. Alternativ oder zusätzlich zu einem Fußboden kann das Schienenfahrzeug andere Anordnungen mit zumindest einer sandwichartigen Platte aufweisen, die an ihrem Rand mit einem Profil verbunden ist.

Der in Fig. 4 dargestellte Querschnitt durch einen Randbereich eines ersten sandwichartigen plattenförmigen Bauteils 70 mit Kern 71 und gegenüberliegenden Deckschichten 3, 4 ist mit einem Rand-Abschlussprofil 73 verbunden. An der ersten, oben dargestellten Seite ist die erste Deckschicht 3 ähnlich wie bereits anhand von Fig. 1 beschrieben durch Schäften mit einem Profilschenkel 77 des Rand-Abschlussprofils 73 verbunden. Auf der gegenüberliegenden, unten dargestellten Seite ist die Deckschicht 4 ebenfalls durch Schäften mit einem Profilschenkel 77 des Rand-Abschlussprofils 73 verbunden. Die Profilschenkel 77 an den gegenüberliegenden Seiten sind miteinander über einen Profilsteg 72 verbunden.

An den Übergängen zwischen den Profilschenkeln 77 und dem Profilsteg 72 befindet sich jeweils ein Anschlag 79, an den in dem Ausführungsbeispiel der Kernbereich 71 des Bauteils 70 anschlägt. Da die Anschläge 79 von dem Profilsteg 72 aus gesehen in Richtung des Kernbereichs 71 vorspringen, ist zwischen dem ebenen Rand des Kernbereichs 71 und dem Profilsteg 72 ein Hohlraum 84 gebildet, in den z.B. Klebstoffüberschüsse gelangen können, wenn das plattenförmige Bauteil 70 durch Kleben mit dem Rand-Abschlussprofil 73 verbunden wird. Da Kräfte und insbesondere Biegemomente fast ausschließlich über die Deckschichten 3, 4 an den gegenüberliegenden Seiten des Bauteils 70 auf das Rand-Abschlussprofil 73 (oder auf ein Verbindungsprofil und damit auf benachbarte Bauteile) übertragen werden, schwächt der Hohlraum 84 die Verbindung zu dem Profil nicht oder nicht wesentlich.

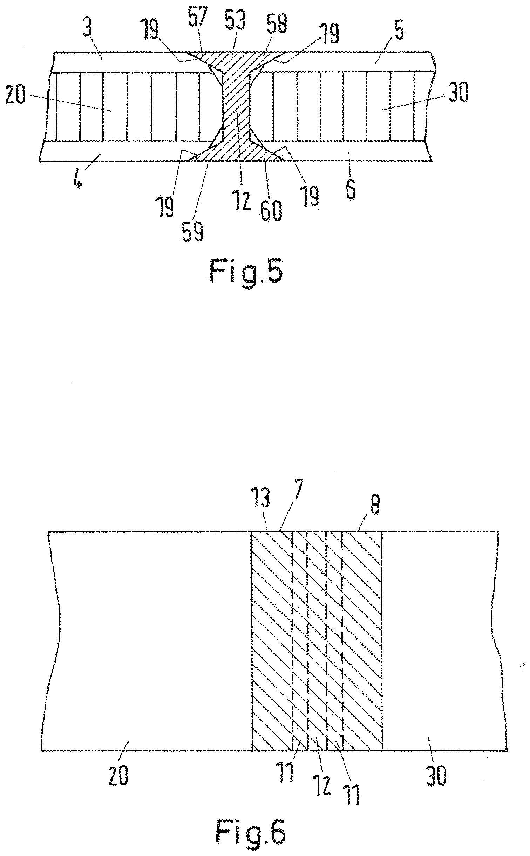

Das in Fig. 5 dargestellte Ausführungsbeispiel, hat ein Verbindungsprofil 53, bei dem zweite Profilschenkel 59, 60 (unten in der Figur) den ersten Profilschenkeln 57, 58 (oben in der Figur) gegenüberliegen. Alle Profilschenkel sind durch Schäften mit einer Deckschicht 3, 4, 5, 6 eines der Bauteile 20, 30 verbunden. Das Verbindungsprofil 53 und auch die gesamte Anordnung sind symmetrisch zur in Fig. 5 horizontal verlaufenden Mittelebene der plattenförmigen Bauteile 20, 30 ausgestaltet. Auch sind die ersten Profilschenkel 57, 58 und die zweiten Profilschenkel 59, 60 jeweils gleich lang in ihrem Verlauf vom Profilsteg 12 bis zu ihrem freien Ende. Die Anordnung hat durchgehende ebene Oberflächen an den einander gegenüberliegenden Seiten und weist daher über den Verbindungsbereich der beiden Bauteile eine gleich bleibende Dicke auf.

In der Draufsicht der Fig. 6 sind rechts und links Teilbereiche der Oberfläche an der ersten Seite des ersten Bauteils 20 und des zweiten Bauteils 30 dargestellt. Zwischen den Bauteilen 20, 30 befindet sich der Übergangsbereich mit dem Profilsteg, zum Beispiel dem Profilsteg 12 aus Fig. 1 (oder dem Profilsteg aus Fig. 8). Die Profilschenkel, zum Beispiel die Profilschenkel 7, 8 aus Fig. 1 (oder die Profilschenkel aus Fig. 8), erstrecken sich beidseits des Profilsteges 12, dessen Grenzflächen zu den Rändern der Bauteile 20, 30 durch zwei gestrichelte Linien angedeutet sind. Rechts und links davon ist jeweils eine weitere gestrichelte Linie dargestellt, die die Grenzlinie zwischen der Kontaktfläche der Profilschenkel 7, 8 zu den Deckschichten der Bauteile 20, 30 und den Hohlräumen 11 am Übergang zu der Kontaktfläche des Profilsteges 12 und den Rändern der Kernbereiche der plattenförmigen Bauteile 20, 30 darstellen. Alternativ stellen diese Linien die Grenzlinien zwischen dem Anschlag (79 in Fig. 8) zu dem Kernbereich des Bauteils dar (siehe Fig. 8). Die gestrichelten Linien wären in der Draufsicht nur dann tatsächlich zu erkennen, wenn das Material des Verbindungsprofils durchsichtig wäre. Es handelt sich um durch die Profilschenkel 7, 8 verdeckte Linien. Wie aus der Darstellung erkennbar ist, erstrecken sich die Ränder der Bauteile 20,30, die an dem Profilsteg 12 anliegen, einander gegenüberliegend und insbesondere parallel zueinander, in einer in Fig. 6 von oben nach unten verlaufenden Längsrichtung eines Zwischenraumes, der durch den Profilsteg 12 ausgefüllt wird.

Das in Fig. 7 dargestellte Verbindungsprofil 83 ist ähnlich dem Verbindungsprofil 53 in Fig. 5 gestaltet. Seine Profilschenkel 87 weisen jedoch an den Grenzflächen, die im späteren Plattenverbund an die abgeschrägten Oberflächen der Deckschichten angrenzen, eine flachere Neigung als im Beispiel der Fig. 5 auf. Die Grenzfläche ist somit noch größer als in Fig. 5 und es findet ein noch kontinuierlicherer Übergang von der Deckschicht auf den Profilschenkel (bzw. umgekehrt) statt. Diskontinuitäten der mechanischen Eigenschaften sind weiter verringert.

Ein weiterer Unterschied der Verbindungsprofile 53 aus Fig. 5 und 83 aus Fig. 7 besteht in vier Anschlägen 79, von denen sich jeweils einer am Übergang der Grenzfläche eines Profilschenkels 87 zu dem Profilsteg 82 befindet. Solche Anschläge 79 sind ebenfalls bei dem Rand-Abschlussprofil 73 aus Fig. 4 vorhanden. Zwischen jeweils zwei Anschlägen 79, die ausgehend von dem Profilsteg 82 in Richtung desselben Kernbereichs einer angrenzenden Platte vorspringen, wird im fertigen Verbund zwischen Platte und Verbindungsprofil ein Hohlraum 84 gebildet. Der fertige Plattenverbund ist in Fig. 8 dargestellt. Jeweils ein Hohlraum 84 befindet sich in der Darstellung rechts und links von dem Profilsteg 82. Abgesehen von der Tatsache, dass das Verbindungsprofil 83 der Verbindung zweier plattenförmiger Bauteile 70, 80 miteinander dient, ist die Verbindung des Profils 83 zu den einzelnen Bauteilen 70, 80 in gleicher Weise realisiert wie für das Rand-Abschlussprofil 73 mit dem in Fig. 4 dargestellten Bauteil 70. Dies bedeutet, dass sich in Fig. 8 rechts von dem Profilsteg 82 das zweite plattenförmige Bauteil 80 befindet, dessen Kernbereich 81 an die Anschläge 79 rechts des Profilstegs 82 anschlägt und den Hohlraum 84 zu dem Profilsteg 82 bildet. Die erste, obere Deckschicht 5 des Bauteils 80 ist durch Schäften mit einem Profilschenkel 87 verbunden. Die zweite, gegenüberliegende Deckschicht 6 des Bauteils 80 ist durch Schäften mit dem gegenüberliegenden Profilschenkel 87 verbunden.

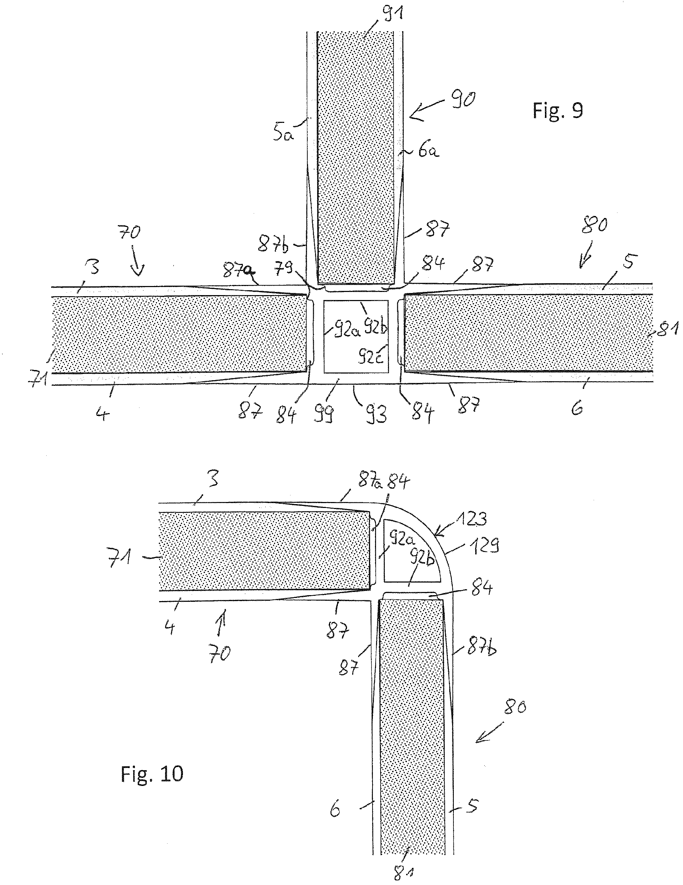

Auch die Verbindungsprofile, die im Folgenden anhand von Fig. 9 und Fig. 10 beschrieben werden, erlauben jeweils auf einer Seite des Verbindungsprofils eine Verbindung zu einem sandwichartigen plattenförmigen Bauteil, wobei die Verbindung in gleicher Weise wie die Verbindungen ausgeführt sind, die bereits anhand von Fig. 4 und Fig. 8 beschrieben wurden.

Das in Fig. 9 dargestellte Verbindungsprofil 93 erlaubt die Verbindung von drei plattenförmigen sandwichartigen Bauteilen 70, 80, 90 miteinander zu einem im Querschnitt T-förmigen Plattenverbund. Das erste Bauteil 70 ist in der gewählten Darstellung wieder links dargestellt. Seine erste Deckschicht 3 (die obere dargestellte Deckschicht) ist durch Schäften mit einem ersten Profilschenkel 87a des Verbindungsprofils 93 verbunden. Seine gegenüberliegende zweite Deckschicht 4 ist durch Schäften mit einem gegenüberliegenden Profilschenkel 87 verbunden. Zu dem angrenzenden Profilsteg 92a des Verbindungsprofils 93 besteht Kontakt des Kerns über die bereits anhand von Fig. 4, 7 und 8 beschriebenen Anschläge 79. Daher ist wiederum ein Hohlraum 84 zwischen dem Rand des Kernbereichs 71 und dem Profilsteg 92a gebildet.

Die Verbindung des Verbindungsprofils 93 zu dem zweiten sandwichartigen plattenförmigen Bauteil 80 ist wie in Fig. 8 ausgebildet, nämlich durch Schäften zweier einander gegenüberliegender Profilschenkel 87 mit jeweils einer der Deckschichten 5, 6 des Bauteils 80. Zwar ist die Verbindung zu den Bauteilen 70, 80 wie auch in Fig. 8 bezüglich einer in Figurenebene vertikal verlaufenden Symmetrieebene spiegelbildlich. Jedoch weist das Verbindungsprofil 93 in Fig. 9 im Gegensatz zu dem Verbindungsprofil 83 in Fig. 8 zwei parallel zueinander verlaufende und zueinander beabstandete Profilstege 92a, 92c auf. Zwischen diesen beiden Profilstegen 92 befindet sich ein Hohlraum, der unten durch einen quer zu den Profilstegen 92a, 92c verlaufenden Verbindungssteg 99 und oben in der Darstellung durch einen weiteren Profilsteg 92d begrenzt wird. Der Hohlraum ist demnach im Querschnitt vierseitig begrenzt und in dem konkreten Ausführungsbeispiel rechteckig.

An dem oberen Profilsteg 92b sind nach oben vorspringend wiederum zwei der Anschläge 79 ausgebildet, die an einen Kernbereich 91 des dritten Bauteils 90 anschlagen, sodass zwischen ihnen und zwischen dem Profilsteg 92c und dem ebenen Rand des Kernbereichs 91 ein Hohlraum 84 gebildet ist. Die sich von dem Profilsteg 92b in der Darstellung nach oben erstreckenden Profilschenkel 87b, 87 sind durch Schäften jeweils mit einer Deckschicht 5a, 6a des dritten Bauteils 90 verbunden.

Das in Fig. 10 dargestellte Verbindungsprofil 123 ermöglicht eine Eckverbindung zweier sandwichartiger plattenförmiger Bauteile 70, 80. Ein solches Eck-Verbindungsprofil muss nicht wie das in Fig. 10 gezeigte eine rechtwinklige Eckverbindung ergeben, wenn die beiden Profilstege 92a, 92b, die jeweils an einem Kernbereich 71, 81 eines der Bauteile 70, 80 anstoßen, unter einem anderen Winkel als 90° gegeneinander abgewinkelt verlaufen würden. Die sich voneinander weg erstreckenden Enden der beiden Profilstege 92a, 92b sind über einen weiteren Steg 129 miteinander verbunden, sodass sich zwischen den Stegen 92a, 92b und 129 ähnlich wie in Fig. 9 ein Hohlraum innerhalb des Verbindungsprofils ergibt. In dem konkreten Ausführungsbeispiel der Fig. 10 ist der weitere Steg 129 im Querschnitt gebogen ausgeführt. Er kann jedoch alternativ im Querschnitt betrachtet in gerader Richtung verlaufen und optional abschnittsweise gebogen ausgeführt sein.

Die insgesamt vier Profilschenkel 87a, 87, 87b, 87 des Verbindungsprofils 123 sind wie die Profilschenkel 87 in Fig. 8 jeweils paarweise mit einem der Bauteile 70, 80 verbunden, wobei jedoch die Ausrichtung der jeweiligen Paare der Profilschenkel zueinander anders ist, da es sich um ein Eck-Verbindungsprofil handelt.

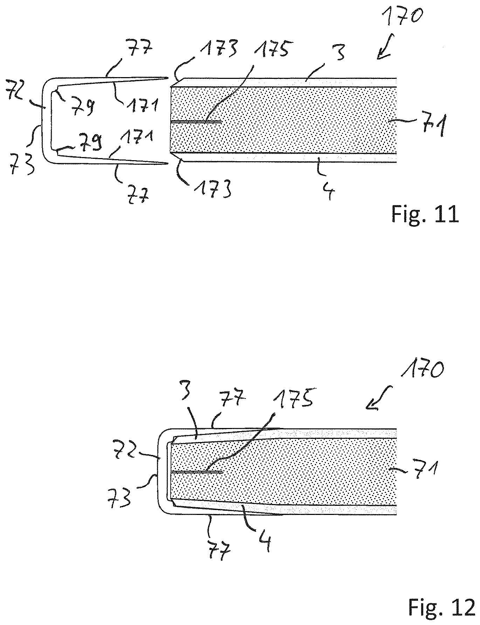

Fig. 11 zeigt ein erstes sandwichartiges plattenförmiges Bauteil 170 ähnlich dem Bauteil 70, das in der Anordnung in Fig. 4 dargestellt ist. Auch zeigt die Fig. 11 ein Rand-Abschlussprofil 73 wie in Fig. 4. gleiche Bezugszeichen in Fig. 11 und 12 bezeichnen gleiche Merkmale wie in Fig. 4. das Rand-Abschlussprofil 73 weist zwei schräg zur Vertikalen verlaufende Grenzflächen 171 auf, über die das Rand-Abschlussprofil 73 mit den Deckschichten 3, 4 des plattenförmigen Bauteils 170 durch Schäften verbunden werden soll. Die Deckschichten 3, 4 weisen an ihrem links in Fig. 11 dargestellten Ende jeweils eine schräg zur Vertikalen verlaufende Oberfläche 173 auf, die jedoch nicht als Grenzflächen für die Verbindung mit den Grenzflächen 171 vorgesehen sind. Vielmehr dienen sie lediglich der Vereinfachung des Vorganges, der zur Herstellung der Verbindung ausgeführt wird. Ebenfalls zur Erleichterung des Vorganges dient ein Schlitz 175 im Kern 71 des plattenförmigen Bauteils 170, der sich von dem Rand des Kerns 71 in das Innere des Kerns 71 hinein erstreckt. Vorzugsweise erstreckt sich der Schlitz 175 wie auch das plattenförmige Bauteile 170 und das Rand-Abschlussprofil 73 durchgehend in Längsrichtung (das heißt senkrecht zur Figurenebene der Fig. 11).

Bei dem Vorgang der Verbindung werden das sandwichartige plattenförmige Bauteil 170 und das Rand-Abschlussprofil 73 aufeinander zu bewegt. Dabei drücken die einander gegenüberliegenden Profilschenkel 77 des plattenförmigen des Rand-Abschlussprofils 73 die Deckschichten 3, 4 und den Kern 71 in der vertikal in Fig. 11 und 12 verlaufenden Richtung (d.h. in der Richtung, die die erste Seite und die zweite Seite des plattenförmigen Bauteils 170 verbindet) zusammen. Insbesondere kann dadurch sowohl die Dicke der Deckschichten 3, 4 in dem Verbindungsbereich als auch die Dicke des Kerns 71 in dem Verbindungsbereich abnehmen, und zwar umso stärker je näher der entsprechende Bereich der Deckschichten 3, 4 und des Kerns 71 an dem Rand des plattenförmigen Bauteils 170 liegt.

Durch diese Art des Schäftens werden Randabschnitte der Oberfläche der Deckschichten 3, 4 gegen den sonstigen Verlauf der Oberfläche geneigt und damit an die Neigung der Grenzflächen 171 an den Innenseiten der Profilschenkel 77 angepasst. Im Ergebnis (wie in Fig. 12 dargestellt) verlaufen die vorher bestehenden Grenzflächen 171 der Profilschenkel 77 ebenfalls (wie bei der anderen Art des Schäftens) parallel oder annähernd parallel zu den Grenzflächen der innerhalb der Profilschenkel 77 liegenden Decksch icht-Abschnitte.

Die beiden Arten des Schäftens (durch Zusammenpressen oder durch vorgeformte Grenzflächen beider Teile) können auch miteinander kombiniert werden. Zum Beispiel kann ein Randabschnitt zumindest einer Deckschicht vor dem Verbinden mit dem Profilschenkel geringfügig abgeschrägt werden und die so vorbereitete geneigte Grenzfläche durch den Prozess des Verbindens unter dem Druck des Profilschenkels stärker geneigt und dadurch weiter an die Neigung der Grenzfläche des Profilschenkels angepasst werden.

## Patentansprüche

1. Fahrzeug (100), insbesondere Schienenfahrzeug, mit einer Anordnung, die ein erstes sandwichartiges plattenförmiges Bauteil (170) sowie ein Rand-Abschlussprofil (173) und/oder Verbindungsprofil (83; 93; 123) aufweist, wobei
• das erste sandwichartige plattenförmige Bauteil (170) einen plattenförmigen Kernbereich (71) aus einem Kernmaterial und eine Deckschicht (3) aus einem von dem Kernmaterial verschiedenen Deckschichtmaterial aufweist,
• das Rand-Abschlussprofil (73) und/oder Verbindungsprofil (83; 93; 123) einen Profilsteg (72; 82; 92) aufweist, der an einem Rand des ersten plattenförmigen Bauteils (170) in einer Längsrichtung des Randes verläuft und der sich von einer ersten Seite der Anordnung, an der die Deckschicht (3) des ersten sandwichartigen plattenförmigen Bauteils (170) angeordnet ist und an der eine erste Oberfläche des ersten sandwichartigen plattenförmigen Bauteils (170) liegt, zu einer zweiten Seite der Anordnung erstreckt, an der eine der Deckschicht (3) und der ersten Oberfläche gegenüberliegende zweite Oberfläche des ersten sandwichartigen plattenförmigen Bauteils (170) liegt,
• das Rand-Abschlussprofil (73) und/oder das Verbindungsprofil (83; 93; 123) einen ersten Profilschenkel (77; 87) aufweist, der an der ersten Seite der Anordnung gegen den Profilsteg (72; 82; 92) abgewinkelt ist und in der Längsrichtung des Randes verläuft,
• der erste Profilschenkel (77; 87) ganz oder teilweise in einer Aussparung (19) des ersten plattenförmigen Bauteils (170) aufgenommen ist,
• der in der Aussparung des ersten plattenförmigen Bauteils (170) aufgenommene erste Profilschenkel (77; 87) durch Schäften mit der Deckschicht (3) des ersten plattenförmigen Bauteils (170) verbunden ist, d.h. parallel zueinander verlaufende Grenzflächen des ersten Profilschenkels (77; 87) und der Deckschicht des plattenförmigen Bauteils (170) verlaufen schräg, unter einem spitzen Winkel zu einer Oberflächennormalen des ersten plattenförmigen Bauteils (170) und sind miteinander verbunden,
**dadurch gekennzeichnet, dass**
• die Aussparung des ersten plattenförmigen Bauteils (170) ganz oder teilweise von einer Aussparung der Deckschicht (3) des ersten plattenförmigen Bauteils (170) gebildet ist und
• sich ein Schlitz (175) von dem Rand des Kernbereichs (71) in das Innere des Kernbereichs (71) des plattenförmigen Bauteils (170) hinein erstreckt.

2. Fahrzeug nach Anspruch 1, wobei die Anordnung das Verbindungsprofil (83), ein erstes (170) und ein zweites (80) sandwichartiges plattenförmiges Bauteil aufweist, die zu einem gemeinsamen plattenförmigen Verbundbauteil verbunden sind, wobei
• das zweite sandwichartige plattenförmige Bauteil (80) einen plattenförmigen Kernbereich (81; 91) aus einem Kernmaterial und eine Deckschicht (5) aus einem von dem Kernmaterial verschiedenen Deckschichtmaterial aufweist,
• der Profilsteg (82) des Verbindungsprofils (83) in einem Zwischenraum zwischen sich einander gegenüberliegend erstreckenden Rändern des ersten (170) und des zweiten (80) plattenförmigen Bauteils in einer Längsrichtung der Ränder verläuft und der Profilsteg (82) sich von einer ersten Seite der Anordnung, an der die Deckschichten (3, 5) der sandwichartigen plattenförmigen Bauteile (70, 80) angeordnet sind und an der die erste Oberfläche des ersten plattenförmigen Bauteils (170) und eine erste Oberfläche des zweiten plattenförmigen Bauteils (80) liegen, zu einer zweiten Seite der Anordnung erstreckt, an der den Deckschichten (3, 5) und den ersten Oberflächen gegenüberliegende zweite Oberflächen des ersten (170) und des zweiten (80) plattenförmigen Bauteils liegen,
• das Verbindungsprofil (83) zwei erste Profilschenkel (87) aufweist, die sich an der ersten Seite der Anordnung ausgehend von dem Profilsteg (82) in einander entgegengesetzte Richtungen erstrecken und die in der Längsrichtung der Ränder verlaufen,
• einer der ersten Profilschenkel (87) ganz oder teilweise in einer Aussparung (19) des zweiten plattenförmigen Bauteils (80) aufgenommen ist,
• die Aussparung (19) des zweiten plattenförmigen Bauteils (80) ganz oder teilweise von einer Aussparung der Deckschicht (5) des zweiten plattenförmigen Bauteils (80) gebildet ist,
• der in der Aussparung (19) des zweiten plattenförmigen Bauteils (80) aufgenommene erste Profilschenkel (87) durch Schäften mit der Deckschicht (5) des zweiten plattenförmigen Bauteils (80) verbunden ist, d.h. parallel zueinander verlaufende Grenzflächen des ersten Profilschenkels (87) und der Deckschicht (5) des zweiten plattenförmigen Bauteils (80) verlaufen schräg, unter einem spitzen Winkel zu einer Oberflächennormale des zweiten plattenförmigen Bauteils (80) und sind miteinander verbunden.

3. Fahrzeug nach Anspruch 2, wobei das Verbindungsprofil (83) zwei zweite Profilschenkel (9, 10; 59, 60) aufweist, die sich an der zweiten Seite der Anordnung ausgehend von dem Profilsteg (82) in einander entgegengesetzte Richtungen erstrecken und die in der Längsrichtung der Ränder verlaufen, so dass Randbereiche des ersten (170) und des zweiten (80) plattenförmigen Bauteils, die die sich einander gegenüberliegend erstreckenden Ränder des ersten (170) und des zweiten (80) plattenförmigen Bauteils bilden, zwischen jeweils einem der ersten Profilschenkel (77, 87) und jeweils einem der zweiten Profilschenkel (9, 10; 59, 60) aufgenommen sind.

4. Fahrzeug nach Anspruch 2 oder 3, wobei die erste Oberfläche des ersten plattenförmigen Bauteils (170), eine Verbindungsprofiloberfläche des Verbindungsprofils (83) an der ersten Seite und die erste Oberfläche des zweiten plattenförmigen Bauteils (80) in einer gemeinsamen Ebene liegen, die den Zwischenraum zwischen den sich einander gegenüberliegend erstreckenden Rändern überbrückt.

5. Fahrzeug nach Anspruch 1, wobei die Anordnung das Verbindungsprofil (93; 123), ein erstes sandwichartiges plattenförmiges Bauteil (170) und ein zweites sandwichartiges plattenförmiges Bauteil (80; 90) aufweist, die zu einem gemeinsamen Verbundbauteil verbunden sind, wobei
• das zweite sandwichartige plattenförmige Bauteil (80; 90) einen plattenförmigen Kernbereich (81; 91) aus einem Kernmaterial und eine Deckschicht (5; 5a) aus einem von dem Kernmaterial verschiedenen Deckschichtmaterial aufweist,
• der Profilsteg ein erster Profilsteg (92a) ist, der an dem Rand des ersten plattenförmigen Bauteils (170) in der Längsrichtung des Randes verläuft, und das Verbindungsprofil (93; 123) einen zweiten Profilsteg (92b) aufweist, der an einem Rand des zweiten plattenförmigen Bauteils (80; 90) in der Längsrichtung des Randes verläuft und der sich von einer ersten Seite des zweiten sandwichartigen plattenförmigen Bauteils (80; 90), an der die Deckschicht (5; 5a) eine erste Oberfläche des zweiten plattenförmigen Bauteils (80; 90) bildet, zu einer zweiten Seite des zweiten sandwichartigen plattenförmigen Bauteils (80; 90) erstreckt, an der eine der Deckschicht (5; 5a) und der ersten Oberfläche gegenüberliegende zweite Oberfläche des zweiten plattenförmigen Bauteils (80; 90) liegt,
• der erste Profilsteg (92a) und der zweite Profilsteg (92b) abgewinkelt zueinander angeordnet sind und die Längsrichtungen der Ränder des ersten plattenförmigen Bauteils (170) und des zweiten (30) plattenförmigen Bauteils (80; 90) parallel zueinander verlaufen,
• das Verbindungsprofil (93; 123) zwei erste Profilschenkel (87a; 87b) aufweist, von denen jeweils einer an der ersten Seite des ersten oder zweiten plattenförmigen Bauteils (70, 80; 90) in der Längsrichtung des Randes (15) verläuft, wobei die zwei ersten Profilschenkel (87a; 87b) in zueinander abgewinkelte Richtungen verlaufen,
• einer (87b) der ersten Profilschenkel (87a; 87b) ganz oder teilweise in einer Aussparung (19; 29) des zweiten plattenförmigen Bauteils (30) aufgenommen ist,
• die Aussparung des zweiten plattenförmigen Bauteils ganz oder teilweise von einer Aussparung der Deckschicht (5; 5a) des zweiten plattenförmigen Bauteils (80; 90) gebildet ist,
• der in der Aussparung des zweiten plattenförmigen Bauteils (80; 90) aufgenommene erste Profilschenkel (87b) durch Schäften mit der Deckschicht (5; 5a) des zweiten plattenförmigen Bauteils (80; 90) verbunden ist, d.h. parallel zueinander verlaufende Grenzflächen des ersten Profilschenkels (87b) und der Deckschicht (5; 5a) des zweiten plattenförmigen Bauteils (80; 90) verlaufen schräg, unter einem spitzen Winkel zu einer Oberflächennormale des zweiten plattenförmigen Bauteils (80; 90) und sind miteinander verbunden.

6. Fahrzeug nach einem der Ansprüche 1 bis 5, wobei ein Anschlag des Rand-Abschlussprofils und/oder des Verbindungsprofils (83; 93; 123) in einem Übergangsbereich zwischen dem Profilsteg (82; 92) und dem in die Aussparung (19) aufgenommenen Profilschenkel (87) an dem Rand des sandwichartigen plattenförmigen Bauteils (70, 80; 90) anschlägt.

7. Fahrzeug nach einem der Ansprüche 1 bis 6, wobei zwischen dem Profilsteg (82, 92) und einem Rand des Kernbereichs (71, 81) des sandwichartigen plattenförmigen Bauteils (170) ein Hohlraum (84) vorhanden ist.

8. Fahrzeug nach Anspruch 7, wobei der Hohlraum (84) einen Überschuss eines stoffschlüssig verbindenden Materials aufweist.

9. Verfahren zum Herstellen eines Fahrzeuges, insbesondere eines Schienenfahrzeuges, wobei ein erstes sandwichartiges plattenförmiges Bauteil (170), das einen plattenförmigen Kernbereich (71) aus einem Kernmaterial und eine Deckschicht (3) aus einem von dem Kernmaterial verschiedenen Deckschichtmaterial aufweist, mit einem Rand-Abschlussprofil (73) und/oder einem Verbindungsprofil (83; 93; 123) zu einer Anordnung verbunden wird, wobei
• ein Profilsteg (72; 82; 92) des Rand-Abschlussprofils (73) oder des Verbindungsprofils (83; 93; 123) derart angeordnet wird, dass der Profilsteg (72; 82; 92) an einem Rand des ersten sandwichartigen plattenförmigen Bauteils (170) in einer Längsrichtung des Randes verläuft und der Profilsteg (72; 82; 92) sich von einer ersten Seite der Anordnung, an der die Deckschicht (3) des ersten sandwichartigen plattenförmigen Bauteils (170) angeordnet ist und an der eine erste Oberfläche des ersten sandwichartigen plattenförmigen Bauteils (170) liegt, zu einer zweiten Seite der Anordnung erstreckt, an der eine der Deckschicht (3) und der ersten Oberfläche gegenüberliegende zweite Oberfläche des ersten sandwichartigen plattenförmigen Bauteils (170) liegt,
• ein erster Profilschenkel (77; 87) des Rand-Abschlussprofils (73) oder des Verbindungsprofils (83; 93; 123) so angeordnet wird, dass der erste Profilschenkel (77; 87) an der ersten Seite der Anordnung gegen den Profilsteg (72; 82; 92) abgewinkelt ist und in der Längsrichtung des Randes verläuft,
• der erste Profilschenkel (77; 87) ganz oder teilweise in einer Aussparung (19) des ersten plattenförmigen Bauteils (170) angeordnet wird,
• der erste Profilschenkel (77; 87) durch Schäften mit der Deckschicht (3) des ersten plattenförmigen Bauteils (170) verbunden wird, d.h. es werden parallel zueinander verlaufende Grenzflächen des ersten Profilschenkels (77; 87) und der Deckschicht (3) des ersten plattenförmigen Bauteils (170) gebildet, die schräg, unter einem spitzen Winkel zu einer Oberflächennormale des ersten plattenförmigen Bauteils (170) verlaufen, und die Grenzflächen des ersten Profilschenkels (77; 87) und der Deckschicht (3) werden miteinander verbunden,
**dadurch gekennzeichnet, dass**
• die Aussparung des ersten plattenförmigen Bauteils (170) ganz oder teilweise durch eine Aussparung der Deckschicht (3) des ersten plattenförmigen Bauteils (170) gebildet wird und
• sich ein Schlitz (175) von dem Rand des Kernbereichs (71) in das Innere des Kernbereichs (71) des plattenförmigen Bauteils (170) hinein erstreckt.

## Claims

1. A vehicle (100), in particular rail vehicle, with an arrangement that comprises a first sandwich-type sheet component (170) and an edge termination profile (173) and/or connection profile (83; 93; 123), wherein
• the first sandwich-type sheet component (170) comprises a sheet core region (71) made of a core material and a cover layer (3) made of a cover layer material which is different from the core material,
• the edge termination profile (73) and/or connection profile (83; 93; 123) comprises a profile web (72; 82; 92) which extends along an edge of the first sheet component (170) in a longitudinal direction of the edge and which extends from a first side of the arrangement, on which the cover layer (3) of the first sandwich-type sheet component (170) is arranged and on which a first surface of the first sandwich-type sheet component (170) is arranged, to a second side of the arrangement, on which a second surface of the first sandwich-type sheet component (170) opposite the cover layer (3) and the first surface is arranged,
• the edge termination profile (73) and/or the connection profile (83; 93; 123) comprises a first profile leg (77; 87), which is angled on the first side of the arrangement relative to the profile web (72; 82; 92) and extends in the longitudinal direction of the edge,
• the first profile leg (77; 87) is received wholly or partially in a recess (19) in the first sheet component (170),
• the first profile leg (77; 87) received in the recess in the first sheet component (170) is connected by scarfing to the cover layer (3) of the first sheet component (170), i.e. boundary surfaces extending parallel to one another of the first profile leg (77; 87) and of the cover layer of the sheet component (170) extend obliquely, at an acute angle to a surface normal of the first sheet component (170) and are connected to one another,
**characterised in that**
• the recess in the first sheet component (170) is formed wholly or partially by a recess in the cover layer (3) of the first sheet component (170), and
• a slot (175) extends from the edge of the core region (71) into the interior of the core region (71) of the sheet component (170).

2. The vehicle according to claim 1, wherein the arrangement comprises the connection profile (83), a first (170) and a second (80) sandwich-type sheet component, which are connected to form a common composite sheet component, wherein
• the second sandwich-type sheet component (80) has a sheet core region (81; 91) made of a core material and a cover layer (5) made of a cover layer material different from the core material,
• the profile web (82) of the connection profile (83) extends in a gap between edges, extending opposite one another, of the first (170) and of the second (80) sheet component in a longitudinal direction of the edges, and the profile web (82) extends from a first side of the arrangement, on which the cover layers (3, 5) of the sandwich-type sheet components (70, 80) are arranged and on which the first surface of the first sheet component (170) and a first surface of the second sheet component (80) are arranged, to a second side of the arrangement, on which second surfaces of the first (170) and of the second (80) sheet component are arranged opposite to the cover layers (3, 5) and opposite to the first surfaces,
• the connection profile (83) has two first profile legs (87), which extend on the first side of the arrangement starting from the profile web (82) in opposite directions and which extend in the longitudinal direction of the edges,
• one of the first profile legs (87) is received wholly or partially in a recess (19) in the second sheet component (80),
• the recess (19) in the second sheet component (80) is formed wholly or partially by a recess in the cover layer (5) of the second sheet component (80),
• the first profile leg (87) received in the recess (19) in the second sheet component (80) is connected by scarfing to the cover layer (5) of the second sheet component (80), i.e. boundary surfaces, extending parallel to one another, of the first profile leg (87) and of the cover layer (5) of the second sheet component (80) extend obliquely, at an acute angle to a surface normal of the second sheet component (80) and are connected to one another.

3. The vehicle according to claim 2, wherein the connection profile (83) has two second profile legs (9, 10; 59, 60), which extend on the second side of the arrangement starting from the profile web (82) in opposite directions and which extend in the longitudinal direction of the edges, such that edge regions of the first (170) and of the second (80) sheet component which form the edges, extending opposite one another, of the first (170) and of the second (80) sheet component are received between in each case one of the first profile legs (77, 87) and in each case one of the second profile legs (9, 10; 59, 60).

4. The vehicle according to claim 2 or 3, wherein the first surface of the first sheet component (170), a connection profile surface of the connection profile (83) on the first side, and the first surface of the second sheet component (80) are arranged in a common plane which bridges the gap between the edges extending opposite one another.

5. The vehicle according to claim 1, wherein the arrangement comprises the connection profile (93; 123), a first sandwich-type sheet component (170), and a second sandwich-type sheet component (80; 90), which are connected to form a common composite component, wherein
• the second sandwich-type sheet component (80; 90) comprises a sheet core region (81; 91) made of a core material and a cover layer (5; 5a) made of a cover layer material which is different from the core material,
• the profile web is a first profile web (92a), which extends along the edge of the first sheet component (170) in the longitudinal direction of the edge, and the connection profile (93; 123) comprises a second profile web (92b), which extends along an edge of the second sheet component (80; 90) in the longitudinal direction of the edge and extends from a first side of the second sandwich-type sheet component (80; 90), on which the cover layer (5; 5a) forms a first surface of the second sheet component (80; 90), to a second side of the second sandwich-type sheet component (80; 90), on which a second surface of the second sheet component (80; 90) opposite the cover layer (5; 5a) and the first surface is arranged,
• the first profile web (92a) and the second profile web (92b) are arranged at an angle to one another and the longitudinal directions of the edges of the first sheet component (170) and of the second (30) sheet component (80; 90) extend parallel to one another,
• the connection profile (93; 123) comprises two first profile legs (87a; 87b), which extend one along the first side of the first sheet component and one along the first side of the second sheet component (70, 80; 90) in the longitudinal direction of the edge (15), the two first profile legs (87a; 87b) extending in directions at an angle to one another,
• one (87b) of the first profile legs (87a; 87b) is received wholly or partially in a recess (19; 29) of the second sheet component (30),
• the recess in the second sheet component is formed wholly or partially by a recess in the cover layer (5; 5a) of the second sheet component (80; 90),
• the first profile leg (87b) received in the recess in the second sheet component (80; 90) is connected by scarfing to the cover layer (5; 5a) of the second sheet component (80; 90), i.e. boundary surfaces, extending parallel to one another, of the first profile leg (87b) and of the cover layer (5; 5a) of the second sheet component (80; 90) extend obliquely, at an acute angle to a surface normal of the second sheet component (80; 90) and are connected to one another.

6. The vehicle according to any one of claims 1 to 5, wherein a stop of the edge termination profile and/or of the connection profile (83; 93; 123) strikes against the edge of the sandwich-type sheet component (70, 80; 90) in a transition region between the profile web (82; 92) and the profile leg (87) received in the recess (19).

7. The vehicle according to any one of claims 1 to 6, wherein a cavity (84) is provided between the profile web (82, 92) and an edge of the core region (71, 81) of the sandwich-type sheet component (170).

8. The vehicle according to claim 7, wherein the cavity (84) comprises an excess of an additional bonding material.

9. A method for producing a vehicle, in particular a rail vehicle, wherein a first sandwich-type sheet component (170), which comprises a sheet core region (71) made of a core material and a cover layer (3) made of a cover layer material which is different from the core material, is connected to an edge termination profile (73) and/or a connection profile (83; 93; 123) to form an arrangement, wherein
• a profile web (72; 82; 92) of the edge termination profile (73) or of the connection profile (83; 93; 123) is arranged in such a way that the profile web (72; 82; 92) extends along an edge of the first sandwich-type sheet component (170) in a longitudinal direction of the edge and the profile web (72; 82; 92) extends from a first side of the arrangement, on which the cover layer (3) of the first sandwich-type sheet component (170) is arranged and on which a first surface of the first sandwich-type sheet component (170) is arranged, to a second side of the arrangement, on which a second surface of the first sandwich-type sheet component (170) opposite the cover layer (3) and the first surface is arranged,
• a first profile leg (77; 87) of the edge termination profile (73) or of the connection profile (83; 93; 123) is arranged such that the first profile leg (77; 87) is angled on the first side of the arrangement relative to the profile web (72; 82; 92) and extends in the longitudinal direction of the edge,
• the first profile leg (77; 87) is arranged wholly or partially in a recess (19) in the first sheet component (170),
• the first profile leg (77; 87) is connected by scarfing to the cover layer (3) of the first sheet component (170), i.e. boundary surfaces, extending parallel to one another, of the first profile leg (77; 87) and of the cover layer (3) of the first sheet component (170) are formed which extend obliquely, at an acute angle to a surface normal of the first sheet component (170), and the boundary surfaces of the first profile leg (77; 87) and of the cover layer (3) are connected to one another,
**characterised in that**
• the recess in the first sheet component (170) is formed wholly or partially by a recess in the cover layer (3) of the first sheet component (170), and
• a slot (175) extends from the edge of the core region (71) into the interior of the core region (71) of the sheet component (170).

## Revendications

1. Véhicule (100), en particulier véhicule ferroviaire, avec un ensemble, qui présente un premier composant (170) en forme de panneau de type sandwich ainsi qu'un profilé de terminaison de bord (173) et/ou un profilé de liaison (83 ; 93 ; 123), dans lequel
• le premier composant (170) en forme de panneau de type sandwich présente une zone centrale (71) en forme de panneau composée d'un matériau central et une couche couvrante (3) composée d'un matériau de couche couvrante différent du matériau central,
• le profilé de terminaison de bord (73) et/ou le profilé de liaison (83 ; 93 ; 123) présentent une entretoise profilée (72 ; 82 ; 92), qui s'étend au niveau d'un bord du premier composant (170) en forme de panneau dans un sens longitudinal du bord et qui s'étend d'un premier côté de l'ensemble, au niveau duquel la couche couvrante (3) du premier composant (170) en forme de panneau de type sandwich est disposée et au niveau duquel se situe une première surface du premier composant (170) en forme de panneau de type sandwich, à un deuxième côté de l'ensemble, au niveau duquel se situe une deuxième surface, faisant face à la couche couvrante (3) et à la première surface, du premier composant (170) en forme de panneau de type sandwich,
• le profilé de terminaison de bord (73) et/ou le profilé de liaison (83 ; 93 ; 123) présentent une première branche profilée (77 ; 87), qui est coudée au niveau du premier côté de l'ensemble contre l'entretoise profilée (72 ; 82 ; 92) et s'étend dans le sens longitudinal du bord,
• la première branche profilée (77 ; 87) est logée en totalité ou en partie dans un évidement (19) du premier composant (170) en forme de panneau,
• la première branche profilée (77 ; 87) logée dans l'évidement du premier composant (170) en forme de panneau est reliée par des tiges à la couche couvrante (3) du premier composant (170) en forme de panneau, en d'autres termes des faces limites s'étendant de manière parallèle les unes par rapport aux autres de la première branche profilée (77 ; 87) et de la couche couvrante du composant (170) en forme de panneau s'étendent de manière inclinée selon un angle aigu par rapport à une normale de surface du premier composant (170) en forme de panneau et sont reliées les unes aux autres,
**caractérisé en ce**
• **que** l'évidement du premier composant (170) en forme de panneau est formé en totalité ou en partie par un évidement de la couche couvrante (3) du premier composant (170) en forme de panneau et
• **qu'**une entaille (175) s'étend depuis le bord de la partie centrale (71) dans l'intérieur de la zone centrale (71) du composant (170) en forme de panneau.

2. Véhicule selon la revendication 1, dans lequel l'ensemble présente le profilé de liaison (83), un premier (170) et un deuxième (80) composant en forme de panneau de type sandwich, qui sont reliés en un composant composite commun en forme de panneau, dans lequel
• le deuxième composant (80) en forme de panneau de type sandwich présente une zone centrale (81 ; 91) en forme de panneau composée d'un matériau central et une couche couvrante (5) composée d'un matériau de couche couvrante différent du matériau central,
• l'entretoise profilée (82) du profilé de liaison (83) s'étend dans un espace intermédiaire entre des bords, s'étendant de manière à se faire face les uns les autres, du premier (170) et du deuxième (80) composant en forme de panneau dans un sens longitudinal des bords et l'entretoise profilée (82) s'étend d'un premier côté de l'ensemble, au niveau duquel les couches couvrantes (3, 5) des composants (70, 80) en forme de panneau de type sandwich sont disposées et au niveau duquel la première surface du premier composant (170) en forme de panneau et une première surface du deuxième composant (80) en forme de panneau se situent, à un deuxième côté de l'ensemble, au niveau duquel se situent des deuxièmes surfaces, faisant face aux couches couvrantes (3, 5) et aux premières surfaces, du premier (170) et du deuxième (80) composant en forme de panneau,
• le profilé de liaison (83) présente deux premières branches profilées (87), qui s'étendent au niveau du premier côté de l'ensemble en partant de l'entretoise profilée (82) dans des directions opposées les unes aux autres et qui s'étendent dans le sens longitudinal des bords,
• une des premières branches profilées (87) est logée en totalité ou en partie dans un évidement (19) du deuxième composant (80) en forme de panneau,
• l'évidement (19) du deuxième composant (80) en forme de panneau est formé en totalité ou en partie par un évidement de la couche couvrante (5) du deuxième composant (80) en forme de panneau,
• la première branche profilée (87) logée dans l'évidement (19) du deuxième composant (80) en forme de panneau est reliée par des tiges à la couche couvrante (5) du deuxième composant (80) en forme de panneau, en d'autres termes des faces limites, s'étendant de manière parallèle les unes par rapport aux autres, de la première branche profilée (87) et de la couche couvrante (5) du deuxième composant (80) en forme de panneau s'étendent de manière inclinée selon un angle aigu par rapport à une normale de surface du deuxième composant (80) en forme de panneau et sont reliées les unes aux autres.

3. Véhicule selon la revendication 2, dans lequel le profilé de liaison (83) présente deux deuxièmes branches profilées (9, 10 ; 59, 60), qui s'étendent dans des directions opposées les unes aux autres au niveau du deuxième côté de l'ensemble en partant de l'entretoise profilée (82) et qui s'étendent dans le sens longitudinal des bords de sorte que des zones de bord du premier (170) et du deuxième (80) composant en forme de panneau, qui forment les bords, s'étendant de manière à se faire face les uns les autres, du premier (170) et du deuxième (80) composant en forme de panneau, sont logées entre respectivement une des premières branches profilées (77, 87) et respectivement une des deuxièmes branches profilées (9, 10 ; 59, 60).

4. Véhicule selon la revendication 2 ou 3, dans lequel la première surface du premier composant (170) en forme de panneau, une surface de profilé de liaison du profilé de liaison (83) au niveau du premier côté et la première surface du deuxième composant (80) en forme de panneau se situent dans un plan commun, qui enjambe l'espace intermédiaire entre les bords s'étendant de manière à se faire face les uns les autres.

5. Véhicule selon la revendication 1, dans lequel l'ensemble présente le profilé de liaison (93 ; 123), un premier composant (170) en forme de panneau de type sandwich et un deuxième composant (80 ; 90) en forme de panneau de type sandwich, qui sont reliés en un composant composite commun, dans lequel
• le deuxième composant (80 ; 90) en forme de panneau de type sandwich présente une zone centrale (81 ; 91) en forme de panneau composée d'un matériau central et une couche couvrante (5 ; 5a) composée d'un matériau de couche couvrante différent du matériau central,
• l'entretoise profilée est une première entretoise profilée (92a), qui s'étend au niveau du bord du premier composant (170) en forme de panneau dans le sens longitudinal du bord, et le profilé de liaison (93 ; 123) présente une deuxième entretoise profilée (92b), qui s'étend au niveau d'un bord du deuxième composant (80 ; 90) en forme de panneau dans le sens longitudinal du bord et qui s'étend d'un premier côté du deuxième composant (80 ; 90) en forme de panneau de type sandwich, au niveau duquel la couche couvrante (5 ; 5a) forme une première surface du deuxième composant (80 ; 90) en forme de panneau, à un deuxième côté du deuxième composant (80 ; 90) en forme de panneau de type sandwich, au niveau duquel se situe une deuxième surface, faisant face à la couche couvrante (5 ; 5a) et à la première surface, du deuxième composant (80 ; 90) en forme de panneau,
• la première entretoise profilée (92a) et la deuxième entretoise profilée (92b) sont disposées de manière coudée l'une par rapport à l'autre et les sens longitudinaux des bords du premier composant (170) en forme de panneau et du deuxième (30) composant (80 ; 90) en forme de panneau s'étendent de manière parallèle les uns par rapport aux autres,
• le profilé de liaison (93 ; 123) présente deux premières branches profilées (87a ; 87b), dont respectivement une branche s'étend au niveau du premier côté du premier ou du deuxième composant (70, 80 ; 90) en forme de panneau dans le sens longitudinal du bord (15), dans lequel les deux premières branches profilées (87a ; 87b) s'étendent dans des directions coudées les unes par rapport aux autres,
• une (87b) des premières branches profilées (87a ; 87b) est logée en totalité ou en partie dans un évidement (19 ; 29) du deuxième composant (30) en forme de panneau,
• l'évidement du deuxième composant en forme de panneau est formé en totalité ou en partie par un évidement de la couche couvrante (5 ; 5a) du deuxième composant (80 ; 90) en forme de panneau,
• la première branche profilée (87b) logée dans l'évidement du deuxième composant (80 ; 90) en forme de panneau est reliée par des tiges à la couche couvrante (5 ; 5a) du deuxième composant (80 ; 90) en forme de panneau, en d'autres termes des faces limites, s'étendant de manière parallèle les unes par rapport aux autres, de la première branche profilée (87b) et de la couche couvrante (5 ; 5a) du deuxième composant (80 ; 90) en forme de panneau s'étendent de manière inclinée selon un angle aigu par rapport à une normale de surface du deuxième composant (80 ; 90) en forme de panneau et sont reliées les unes aux autres.

6. Véhicule selon l'une quelconque des revendications 1 à 5, dans lequel une butée du profilé de terminaison de bord et/ou du profilé de liaison (83 ; 93 ; 123) vient buter au niveau du bord du composant (70, 80 ; 90) en forme de panneau de type sandwich dans une zone de transition entre l'entretoise profilée (82 ; 92) et la branche profilée (87) logée dans l'évidement (19).

7. Véhicule selon l'une quelconque des revendications 1 à 6, dans lequel un espace creux (84) est présent entre l'entretoise profilée (82, 92) et un bord de la zone centrale (71, 81) du composant (170) en forme de panneau de type sandwich.

8. Véhicule selon la revendication 7, dans lequel l'espace creux (84) présente un excédent d'un matériau de liaison par liaison de matière.

9. Procédé de fabrication d'un véhicule, en particulier d'un véhicule ferroviaire, dans lequel un premier composant (170) en forme de panneau de type sandwich, qui présente une zone centrale (71) en forme de panneau composée d'un matériau central et une couche couvrante (3) composée d'un matériau de couche couvrante différent du matériau central, est relié à un profilé de terminaison de bord (73) et/ou à un profilé de liaison (83 ; 93 ; 123) en un ensemble, dans lequel
• une entretoise profilée (72 ; 82 ; 92) du profilé de terminaison de bord (73) ou du profilé de liaison (83 ; 93 ; 123) est disposée de telle manière que l'entretoise profilée (72 ; 82 ; 92) s'étend au niveau d'un bord du premier composant (170) en forme de panneau de type sandwich dans un sens longitudinal du bord et l'entretoise profilée (72 ; 82 ; 92) s'étend d'un premier côté de l'ensemble, au niveau duquel la couche couvrante (3) du premier composant (170) en forme de panneau de type sandwich est disposée et au niveau duquel une première surface du premier composant (170) en forme de panneau de type sandwich se situe, à un deuxième côté de l'ensemble, au niveau duquel se situe une deuxième surface, faisant face à la couche couvrante (3) et à la première surface, du premier composant (170) en forme de panneau de type sandwich,
• une première branche profilée (77 ; 87) du profilé de terminaison de bord (73) ou du profilé de liaison (83 ; 93 ; 123) est disposée de telle sorte que la première branche profilée (77 ; 87) est coudée au niveau du premier côté de l'ensemble contre l'entretoise profilée (72 ; 82 ; 92) et s'étend dans le sens longitudinal du bord,
• la première branche profilée (77 ; 87) est disposée en totalité ou en partie dans un évidement (19) du premier composant (170) en forme de panneau,
• la première branche profilée (77 ; 87) est reliée par des tiges à la couche couvrante (3) du premier composant (170) en forme de panneau, en d'autres termes des faces limites, s'étendant de manière parallèle les unes par rapport aux autres, de la première branche profilée (77 ; 87) et de la couche couvrante (3) du premier composant (170) en forme de panneau sont formées, qui s'étendent de manière inclinée selon un angle aigu par rapport à une normale de surface du premier composant (170) en forme de panneau et les faces limites de la première branche profilée (77 ; 87) et de la couche couvrante (3) sont reliées les unes aux autres,
**caractérisé en ce**
• **que** l'évidement du premier composant (170) en forme de panneau est formé en totalité ou en partie par un évidement de la couche couvrante (3) du premier composant (170) en forme de panneau, et
• **qu'**une entaille (175) s'étend depuis le bord de la zone centrale (71) dans l'intérieur de la zone centrale (71) du composant (170) en forme de panneau.
